# EUROPEAN PATENT APPLICATION

(11) **EP 4 770 154 A1**
(43) Date of publication of application: **01.07.2026**
(21) Application number: 24864511.1
(22) Date of filing: 04.09.2024
(51) Int. Cl.: H04W 12/06

(54) **COMMUNICATION METHOD AND COMMUNICATION APPARATUS**

(30) Priority: 14.09.2023 CN 202311190383
(71) Applicant: HUAWEI TECHNOLOGIES CO., LTD., Shenzhen, Guangdong 518129 (CN)
(72) Inventor: YU, Youyang, Guangdong 518129 (CN)
(74) Representative: Thun, Clemens
(86) International application number: PCT/CN2024/116811
(87) International publication number: WO 2025/055791

(57) **Abstract**

This application provides a communication method and a communication apparatus, applied to a scenario in which a terminal device (for example, an IoT device) accesses a 5GC via a user equipment (for example, a UE), or a user equipment accesses a 5GC. In a process in which the user equipment triggers establishment or modification of a session after the user equipment registers with the 5GC, the method includes: receiving a NAS request message from the user equipment, obtaining user identity information based on the NAS request message, and establishing or modifying the session based on the user identity information. The user identity information indicates a user of the user equipment. In the technical solutions of this application, the user identity information is authenticated and authorized, to support the terminal device or the user equipment in accessing the 5GC, namely, obtaining connectivity services and service management and control provided by the 5GC, to avoid or reduce potential network security risks.

## Description

This application claims priority to Chinese Patent Application No. 202311190383.9, filed with the China National Intellectual Property Administration on September 14, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In communication systems, for example, a 5th generation (5th generation, 5G) mobile communication network not only supports a user equipment (user equipment, UE) in accessing a 5G core network (5G core, 5GC) by using a wireless technology defined by the 3rd generation partnership project (3rd generation partnership project, 3GPP), but also supports the UE in accessing the 5GC by using a non-3GPP access technology. The UE is a terminal device that supports a subscriber identity module (subscriber identity module, SIM) card and a non-access stratum (non-access stratum, NAS) signaling module. For example, after the UE establishes a communication connection with a cellular wireless network, the UE sends NAS signaling to a control plane network element of the 5GC, and the control plane network element performs security authorization on the UE based on an authentication vector in the NAS signaling. A UE that is successfully authenticated and authorized completes a registration procedure with the 5GC based on the NAS signaling. The 5GC may generate context information for the UE, perform mobility management on the UE, and provide network connectivity services, service management and control, and the like.

With the development of the mobile network, the 5GC evolves from to consumer (to consumer, 2C) to to business (to business, to B, 2B), and can be used in campuses, factories, museums, and other scenarios. However, internet of things (internet of things, IoT) devices in 2B scenarios do not support a cellular access technology, and are not equipped with a SIM card or a NAS signaling module, resulting in inability of these devices to access the 5GC. As a result, mobile operators cannot provide connectivity services and service management and control for these IoT devices based on the 5GC.

### SUMMARY

This application provides a communication method and a communication apparatus. A core network element establishes or modifies a session based on user identity information, enabling a terminal device or a user equipment to obtain network-delivered connectivity services and service management and control based on the session.

According to a first aspect, a communication method is provided. The method may be performed by a core network element, or may be performed by a chip or a circuit of the core network element. This is not limited in this application. For ease of description, the following uses an example in which the core network element performs the method for description.

The method includes: receiving a NAS request message from a user equipment, where the NAS message is used to request to establish or modify a session; obtaining user identity information based on the NAS request message, where the user identity information indicates a user of the user equipment; and establishing or modifying the session based on the user identity information.

It should be understood that the method is applied to a process in which the user equipment triggers establishment or modification of the session after the user equipment registers with a core network. In other words, the establishment or modification of the session is triggered based on the user identity information, and the core network element may determine whether the session is successfully established or modified by verifying the user identity information.

For example, the user of the user equipment includes: The user of the user equipment is an end-user using the user equipment, and the user identity information is user identity information of the end-user using the user equipment; or a terminal device is in communication connection with the user equipment, and the user of the user equipment is an end-user using the terminal device, and the user identity information is user identity information of the end-user using the terminal device. The terminal device is a terminal device that supports a non-3GPP access technology and that does not support NAS signaling. In other words, the terminal device may not have a cellular access capability, and does not support the NAS signaling or a SIM card.

It should be noted that the communication connection between the terminal device and the user equipment may be understood as: The user enables a Wi-Fi hotspot function of the user equipment. It is assumed that an access point identifier of the Wi-Fi hotspot is A. The access point identifier A may be identification information set at a user granularity, for example, an access point identifier randomly set by the user, or may be identification information set at a 2B service granularity, for example, a company name is used as the access point identifier. The terminal device (for example, a device like a portable computer, or an iPad) scans available Wi-Fi hotspots, selects the Wi-Fi hotspot whose access point identifier is A, and initiates a connection procedure to the Wi-Fi hotspot. To be specific, the terminal device completes establishment of a layer 2 (layer 2, L2) connection with the user equipment. For a specific implementation of the connection procedure, refer to an existing protocol.

For example, the terminal device may be an IoT device (for example, a notebook computer), and the user equipment may be a UE (for example, a mobile phone). For ease of description and differentiation, in embodiments of this application, the terminal device and the user equipment are respectively used to represent the IoT device and the UE. A difference between the terminal device and the user equipment lies in that the user equipment supports a cellular access technology, a SIM card, and a NAS signaling module, and the IoT device does not support the cellular access technology, supports the non-3GPP access technology, does not support the SIM card, and does not have the NAS signaling module. The non-3GPP access technology includes a wireless local area network (wireless local area network, WLAN) access technology, a Bluetooth access technology, a wired access technology, a fixed network access technology, or a short-distance access technology.

Optionally, the NAS request message may be an uplink non-access stratum transport (uplink non-access stratum transport, UL NAS transport) message or a protocol data unit (protocol data unit, PDU) session establishment/modification request message. For example, the NAS request message sent by the UE and received by an access and mobility management function (access and mobility management function, AMF) may be the UL NAS transport message. The UL NAS transport message may include a session establishment/modification request message (for example, a PDU session establishment/modification request). The AMF continues to send the session establishment/modification request message to a session management function (session management function, SMF), and the SMF is responsible for PDU session establishment, modification, and release.

Optionally, when the UL NAS transport message includes the user identity information, the AMF obtains the user identity information from the UL NAS transport message, and then the AMF continues to send the user identity information to the SMF through an interface between the AMF and the SMF. Alternatively, the PDU session establishment/modification request message includes the user identity information, the AMF continues to forward the PDU session establishment/modification request message to the SMF through an interface between the AMF and the SMF, and the SMF obtains the user identity information from the PDU session establishment/modification request message.

For example, the NAS request message includes a data network name (data network name, DNN) and slice (slice) information.

The NAS request message may further include identification information of the user equipment and/or the user identity information (User ID). It should be understood that the user identity information indicates the end-user using the terminal device, and the user identity information is different from identification information of the terminal device. The identification information of the terminal device may be a device identity document (identity document, ID), or may be address information of a device, for example, an internet protocol (internet protocol, IP) address or a medium access control (medium access control, MAC) address, or may be another representation form used to identify the terminal device. The user identity information may be identity information of a user to which the terminal device belongs, or may be identification information of a user (in other words, identity information of an end-user using the IoT device), for example, information such as an employee ID of an employee, a user name, or a user identity card number, or may be another representation form used to identify the end-user using the terminal device. In other words, the user identity information is used to identify the user, and represents a "person", and the identification information of the terminal device is used to identify the device.

Optionally, the user identity information (User ID) may be limited to being on the terminal device (the IoT device or a device that does not have a 5GC access capability), or may not be limited to being on the terminal device. For example, when the user logs in to a specific application (application, APP) on the user equipment (a mobile phone) by using the user ID, the 5GC may also determine, based on the user ID, whether to allow the user to use the app. Therefore, the user identity information may be used on a device that does not support the 5GC (non-5GC capable device) (for example, the IoT device), or may be used on a device that supports the 5GC (5GC capable device) (for example, the UE). This is not limited in this application.

In other words, the technical solutions of this application are applicable to a scenario in which the terminal device (the IoT device) requests to access the 5GC by connecting to the user equipment, and the 5GC determines, by authenticating and authorizing the identity information of the end-user using the terminal device, whether to establish or modify a session corresponding to the user identity information, that is, whether to allow the terminal device to access the 5GC, or are applicable to a scenario in which the user equipment requests to access the 5GC by including the user identity information, and the 5GC determines, by authenticating and authorizing the identity information of the end-user using the user equipment, whether to establish or modify a session corresponding to the user identity information, that is, whether to allow the user equipment to access the 5GC.

In embodiments of this application, in a scenario in which the terminal device (the IoT device) accesses the core network (for example, the 5GC) via the user equipment (for example, the UE), the user identity information (User ID) of the terminal device is authenticated and authorized, to determine whether the terminal device is allowed to access the core network, that is, whether the core network is supported in providing a network access service, service management and control, and the like for the terminal device. In addition, compared with authenticating and authorizing the terminal device, authenticating and authorizing the user identity information is more secure, and verification on the user identity information may prevent an unauthorized user from accessing the core network, or prevent an unauthorized user from maliciously attacking the core network, or may cause the core network to determine a specific service used by a specific user, to facilitate service management and control, and avoid or reduce potential security risks.

Optionally, the core network element sends a NAS response message to the user equipment, where the NAS response message indicates that the session is successfully established or modified. For example, a session establishment/modification procedure may include: The user equipment sends the uplink NAS transport message to the AMF, where the message carries the PDU session establishment/modification request message, and the AMF forwards a PDU session establishment/modification request to the SMF. The uplink NAS transport message carries the DNN and the slice information. The AMF selects the SMF and sends the DNN and the slice information to the SMF. The SMF is responsible for managing establishment, modification, maintenance, release, and the like of the PDU session of the terminal device. For a specific implementation, refer to the existing protocol. Further, the terminal device or the user equipment may exchange information with the data network by using the session.

With reference to the first aspect, in some implementations of the first aspect, obtaining the user identity information based on the NAS request message includes: receiving the user identity information from a data network-authentication, authorization, and accounting (DN-authentication, authorization, and accounting, DN-AAA) server based on the NAS request message; or receiving the user identity information from the user equipment based on the NAS request message.

With reference to the first aspect, in some implementations of the first aspect, the NAS request message includes the data network name, and the method further includes: sending a first authentication and authorization message (for example, EAP-request/identity) to the user equipment based on the data network name, where the first authentication and authorization message is used to request to authenticate the terminal device or the user equipment; and receiving a first authentication response message (for example, EAP-response/identity) from the user equipment, where the first authentication response message includes the user identity information.

Receiving the user identity information from the DN-AAA server based on the NAS request message includes: determining an address of the DN-AAA server based on the data network name; sending a second authentication and authorization message to the DN-AAA server based on the address of the DN-AAA server, where the second authentication and authorization message includes the first authentication response message, and the second authentication and authorization message is used to request to authenticate and authorize the user identity information; and when the user identity information is successfully authenticated and authorized, receiving a first message from the DN-AAA server, where the first message includes the user identity information and a second message, and the second message indicates that the user identity information is successfully authenticated and authorized.

For example, an implementation in which the core network element determines the address of the DN-AAA server based on the data network name may be that the core network element obtains the address of the DN-AAA server from DNN-related subscription data. The DNN-related subscription data may be obtained from a unified data management (unified data management, UDM) function or a policy control function (policy control function, PCF), or the core network element may obtain the address of the DN-AAA server from the UE. This is not limited in this application.

It should be noted that names of the foregoing messages such as the first authentication and authorization message, the second authentication and authorization message, and the first authentication response message are not limited in this application.

For example, before the SMF sends the second authentication and authorization message to the DN-AAA server, the SMF obtains the user identity information from the NAS request message, or the SMF obtains the user identity information from the message sent by the AMF. Then, the SMF generates the first authentication response message including the user identity information, and sends the second authentication and authorization message including the first authentication response message to the DN-AAA. Alternatively, the SMF sends the first authentication and authorization message to the user equipment, and the user equipment returns the first authentication response message and adds the user identity information to the first authentication response message. The SMF continues to forward, to the DN-AAA by using the second authentication and authorization message, the first authentication response message carrying the user identity information.

Optionally, the NAS request message may alternatively not include the data network name. In this case, after receiving the NAS request message, the AMF or the SMF may determine subscription data of the user equipment and/or subscription data of the user identity information based on the identification information of user equipment and/or the user identity information carried in the NAS request message, obtain a default data network name in the NAS request message from the subscription data of the user equipment or the subscription data of the user identity information, and then the AMF or the SMF may trigger an authentication and authorization procedure for the user equipment or the terminal device based on the data network name.

The subscription data of the user equipment or the subscription data of the user identity information may be configured by a core network management system in a policy control function network element or a unified data management function network element, or sent by an application function network element to a policy control function network element or a unified data management function network element via a network exposure function network element, and then the core network element may query the policy control function network element or the unified data management function network element by including the identification information of the user equipment and/or the user identity information, to obtain the subscription data of the user equipment or the subscription data of the user identity information.

According to the foregoing solution, the core network element may trigger the authentication and authorization procedure for the terminal device based on the NAS request message, and after receiving an authentication and authorization response, request the DN-AAA server to authenticate and authorize the user identity information. In other words, only when the user identity information is successfully authenticated and authorized, the core network element obtains the user identity information from the DN-AAA server, so that the terminal device can access the core network. This provides higher security and can avoid or reduce potential network security risks.

With reference to the first aspect, in some implementations of the first aspect, the first message further includes one or more of the following: an IP address of the session, a user level, a quality of service (quality of service, QoS) parameter, or second indication information, where the QoS parameter indicates a parameter for QoS control performed on a service data flow of the session, the second indication information indicates to collect statistics on the service flow or the data flow of the session, and the user level indicates a service level of the user. The method further includes: The core network element determines, based on the user level and/or the QoS parameter, policy information corresponding to the user identity information. The policy information may be a QoS policy, and includes at least one of a maximum bandwidth of a service, a guaranteed bandwidth of a service, a delay, a packet loss rate, and traffic, for example, a quantity of lost packets reported to the core network at an interval of a T1 time period, and information statistics such as a duration, traffic, and a bandwidth used by the terminal device to access a target website, that are detected by the core network detects, at an interval of a T2 time period.

Optionally, the core network element may determine, based on the IP address that is of the session and that is carried in the first message, a session used by the terminal device or the user equipment to access the core network. Subsequently, the terminal device or the user equipment may access the core network based on the IP address and obtain a service provided by the core network.

Optionally, the core network element may determine, based on the second indication information carried in the first message, to collect statistics on the service flow or the data flow performed after the terminal device or the user equipment accesses the core network. For example, after the terminal device or the user equipment accesses the core network, the core network element collects statistics on information such as one or more web pages or applications that the terminal device or the user equipment logs in to, and duration or traffic of using the web pages or applications, so that a core network side accurately schedules and allocates resources for the terminal device or the user equipment in real time, to ensure a network transmission bandwidth, reduce a network transmission delay, improve network resource utilization, and the like.

According to the foregoing solution, the core network element may independently determine policy information, and accurately schedule and allocate resources to the terminal device in real time, to ensure the network transmission bandwidth, reduce the network transmission delay, improve the network resource utilization, and the like.

With reference to the first aspect, in some implementations of the first aspect, a request message is sent to the policy control function network element or the unified data management function network element, where the request message is used to request to obtain the policy information corresponding to the user identity information, and the request message includes the user identity information; and the policy information is received from the policy control function network element or the unified data management function network element, where the policy information is determined based on a user level and/or a QoS parameter corresponding to the user identity information.

According to the foregoing solution, the core network element may obtain the policy information from the policy control function network element or the unified data management function network element, to subsequently schedule and allocate resources to the terminal device, to ensure the network transmission bandwidth, reduce the network transmission delay, improve the network resource utilization, and the like.

With reference to the first aspect, in some implementations of the first aspect, an IP address of the session is obtained; and the user identity information and the IP address are sent to the DN-AAA server.

According to the foregoing solution, the DN-AAA server may allocate the IP address to the user identity information, and deliver the IP address to the core network element; or the core network element or a user plane function (user plane function, UPF) may allocate the IP address to the user identity information. It should be understood that the IP address usually represents a unique address, and is used to identify a device on the internet or a local network.

With reference to the first aspect, in some implementations of the first aspect, the user identity information is carried in the NAS request message.

For example, the user equipment serving as an authenticator (authenticator) sends the EAP-request/identity message to the terminal device, to request to authenticate and authorize the terminal device; and correspondingly, the terminal device parses the EAP-request/identity message, and returns the EAP-response/identity message to the user equipment. The EAP-response/identity message carries the user identity information user ID. Further, the user equipment triggers, based on the user identity information, initiating the session establishment/modification procedure for the terminal device.

With reference to the first aspect, in some implementations of the first aspect, establishing or modifying the session based on the user identity information includes: obtaining the subscription data of the user equipment or the subscription data of the user identity information based on the user identity information; and establishing or modifying the session based on the subscription data of the user equipment or the subscription data of the user identity information.

Optionally, the subscription data of the user equipment or the subscription data of the user identity information may be configured by a core network management system in a policy control function network element or a unified data management function network element, or sent by an application function network element to a policy control function network element or a unified data management function network element via a network exposure function network element, and then the core network element may query the policy control function network element or the unified data management function network element, to obtain the subscription data of the user equipment or the subscription data of the user identity information.

With reference to the first aspect, in some implementations of the first aspect, the subscription data of the user equipment includes a user identity information list and/or third indication information, the user identity information list includes at least one piece of user identity information, the at least one piece of user identity information indicates at least one piece of user identity information for which access to the user equipment is allowed, and the third indication information indicates that for any piece of user identity information, access to the core network via the user equipment is allowed.

Establishing or modifying the session based on the subscription data of the user equipment includes: if the user identity information is included in the user identity information list, or the subscription data of the user equipment includes the third indication information, establishing or modifying the session; or if the user identity information is not included in the user identity information list, and the subscription data of the user equipment does not include the third indication information, sending the NAS response message to the user equipment, where the NAS response message indicates that the session fails to be established or modified. Optionally, the NAS response message may carry a failure cause value, indicating that the user identity information is not included in the user identity information list and the subscription data of the user equipment does not include the third indication information; in other words, the core network element rejects to establish or modify the session corresponding to the user identity information. Consequently, the user equipment or the terminal device cannot access the 5GC, and cannot obtain connectivity services and service management and control provided by the 5GC.

According to the foregoing solution, the core network element determines whether to establish or modify the session by determining whether the user identity information is included in the user identity information list, or by determining whether the subscription data of the user equipment includes the third indication information, so that network security is ensured when the terminal device or the user equipment subsequently accesses the core network.

With reference to the first aspect, in some implementations of the first aspect, the subscription data of the user identity information includes a user equipment identifier list and/or first indication information, the user equipment identifier list includes at least one user equipment identifier, the at least one user equipment identifier indicates at least one user equipment to which access is allowed for the user identity information, and the first indication information indicates that for the user identity information, access to the core network via any user equipment is allowed.

Establishing or modifying the session based on the subscription data of the user identity information includes: if an identifier of the user equipment is included in the user equipment identifier list, or the subscription data of the user identity information includes the first indication information, establishing or modifying the session; or if the identifier of the user equipment is not included in the user equipment identifier list, and the subscription data of the user identity information does not include the first indication information, sending the NAS response message to the user equipment, where the NAS response message indicates that the session fails to be established or modified. Optionally, the NAS response message may carry a failure cause value, where the failure cause value indicates that the identifier of the user equipment is not included in the user equipment identifier list and the subscription data of the user identity information does not include the first indication information; in other words, the core network element rejects to establish or modify the session corresponding to the user identity information. Consequently, the user equipment or the terminal device cannot access the 5GC, and cannot obtain connectivity services and service management and control provided by the 5GC.

According to the foregoing solution, the core network element determines whether to establish or modify the session by determining whether the identifier of the user equipment is included in the user equipment identifier list, or by determining whether the subscription data of the user identity information includes the first indication information, so that network security is ensured when the user equipment or the terminal device subsequently accesses the core network.

According to a second aspect, a communication method is provided. The method may be performed by a user equipment, or may be performed by a chip or a circuit of the user equipment. This is not limited in this application. For ease of description, the following uses an example in which the user equipment performs the method for description.

The method includes: obtaining user identity information, where the user identity information indicates a user of the user equipment; and sending a NAS request message to a core network element based on the user identity information, where the NAS request message is used to request to establish the session or request to modify the session.

Optionally, the NAS request message includes the user identity information.

It should be understood that the method is applied to a process in which the user equipment triggers establishment or modification of the session after the user equipment registers with a core network. In other words, the establishment or modification of the session is triggered based on the user identity information, and the core network element may determine whether the session is successfully established or modified by verifying the user identity information.

According to the solution provided in this application, in a scenario in which a terminal device (an IoT device) accesses the core network (for example, a 5GC) via the user equipment (for example, a UE), the user identity information (User ID) of the terminal device is authenticated and authorized, to determine whether the terminal device is allowed to access the core network, that is, whether the core network is supported in providing a network access service, service management and control, and the like for the terminal device. In addition, compared with authenticating and authorizing the terminal device, authenticating and authorizing the user identity information is more secure, and verification on the user identity information may prevent an unauthorized user from accessing the core network, or prevent an unauthorized user from maliciously attacking the core network, or may cause the core network to determine a specific service used by a specific user, to facilitate service management and control, and avoid or reduce potential security risks.

With reference to the second aspect, in some implementations of the second aspect, that the user equipment obtains the user identity information includes: obtaining user identity information of an end-user using the user equipment, where the user of the user equipment is the end-user using the user equipment, and the user identity information is the user identity information of the end-user using the user equipment; or when the user equipment establishes a communication connection with a terminal device, obtaining the user identity information from the terminal device, where the user of the user equipment is an end-user using the terminal device, the user identity information is user identity information of the end-user using the terminal device, and the terminal device is a terminal device that supports a non-3rd generation partnership project 3GPP access technology and that does not support NAS signaling.

With reference to the second aspect, in some implementations of the second aspect, obtaining the user identity information includes: sending a request message to the terminal device, where the request message is used to request to obtain the user identity information; and receiving a response message from the terminal device, where the response message includes the user identity information, and the user identity information indicates the end-user using the terminal device.

With reference to the second aspect, in some implementations of the second aspect, before the user equipment triggers the establishment or the modification of the session, the method further includes: receiving a route selection policy from the core network element, where the route selection policy includes an access point identifier and/or the user identity information, and the access point identifier indicates an access point name provided by the user equipment.

With reference to the second aspect, in some implementations of the second aspect, sending the NAS request message to the core network element based on the user identity information includes: when an access point used by the terminal device to establish the communication connection with the user equipment is the same as an access point indicated by the access point identifier included in the route selection policy, sending the NAS request message to the core network element; and/or when the user identity information obtained by the user equipment is the same as the user identity information included in the route selection policy, sending the NAS request message to the core network element.

With reference to the second aspect, in some implementations of the second aspect, the route selection policy further includes indication information, and sending the NAS request message to the core network element based on the user identity information includes: when the indication information indicates the terminal device to establish the communication connection with the user equipment via the access point corresponding to the access point identifier, or when the indication information indicates to obtain the user identity information, sending the NAS request message to the core network element.

Optionally, when different terminal devices perform access via the access point in the route selection policy, the user equipment initiates different session establishment/modification request procedures. Alternatively, when the user equipment obtains different user identity information, the user equipment initiates different session establishment/modification request procedures.

For beneficial effect of the second aspect and some implementations of the second aspect, correspondingly refer to the related descriptions of the first aspect. Details are not described herein again.

According to a third aspect, a communication apparatus is provided. The apparatus includes: a transceiver unit, configured to receive a NAS request message from a user equipment, where the NAS request message is used to request to establish or modify a session; and a processing unit, configured to obtain user identity information based on the NAS request message, where the user identity information indicates a user of the user equipment, where the processing unit is further configured to establish or modify the session based on the user identity information.

The transceiver unit may perform receiving and sending processing in the first aspect, and the processing unit may perform processing other than receiving and sending in the first aspect.

According to a fourth aspect, a communication apparatus is provided. The apparatus includes a transceiver unit, configured to obtain user identity information, where the user identity information indicates a user of user equipment, where the transceiver unit is further configured to send a NAS request message to a core network element based on the user identity information, where the NAS request message is used to request to establish or modify a session.

The transceiver unit may perform receiving and sending processing in the second aspect, and the processing unit may perform processing other than receiving and sending in the second aspect.

According to a fifth aspect, a communication apparatus is provided, and includes a processor. The processor is coupled to a memory, the memory is configured to store a computer program, and the processor is configured to invoke the computer program from the memory and run the computer program, to cause the apparatus to perform the method in any one of the first aspect or the second aspect and the possible implementations of the first aspect or the second aspect.

Optionally, there are one or more processors, and there are one or more memories.

Optionally, the memory may be integrated with the processor, or the memory and the processor are separately disposed.

Optionally, the communication apparatus further includes a transceiver.

According to a sixth aspect, a communication system is provided, and includes a core network element. The core network element is configured to perform the method in any one of the first aspect and the possible implementations of the first aspect.

Optionally, the communication system further includes a user equipment, and the user equipment is configured to perform the method in any one of the second aspect and the possible implementations of the second aspect.

Optionally, the communication system further includes a unified data management function network element, a policy control function network element, an access and mobility management function network element, a session management function network element, a data network-authentication, authorization, and accounting server, or a terminal device.

According to a seventh aspect, a computer-readable storage medium is provided. The computer-readable storage medium stores a computer program or code. When the computer program or code is run on a computer, the computer is caused to perform the method in any one of the first aspect or the second aspect and the possible implementations of the first aspect or the second aspect.

According to an eighth aspect, a chip is provided, and includes at least one processor, the at least one processor is coupled to a memory, the memory is configured to store a computer program, and the processor is configured to invoke the computer program from the memory and run the computer program, to cause an apparatus on which a chip system is installed to perform the method in any one of the first aspect or the second aspect and the possible implementations of the first aspect or the second aspect.

The chip may include an input circuit or interface for sending information or data, and an output circuit or interface for receiving information or data.

According to a ninth aspect, a computer program product is provided. The computer program product includes computer program code. When the computer program code is run on the computer, the method in any one of the first aspect or the second aspect and the possible implementations of the first aspect or the second aspect is performed.

### BRIEF DESCRIPTION OF DRAWINGS

FIG. 1 to FIG. 3 are diagrams of structures of a network architecture applicable to this application;
FIG. 4 is a schematic flowchart of a communication method 400 according to an embodiment of this application;
FIG. 5A and FIG. 5B are a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus 1000 according to an embodiment of this application;
FIG. 9 is a diagram of a structure of a communication apparatus 2000 according to an embodiment of this application; and
FIG. 10 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G network, a 4th generation (4th generation, 4G) mobile communication network, and another future communication system, for example, a 6th generation (6th generation, 6G) mobile communication network.

For ease of description, the PLMN or the 5G network is used as an example for description in embodiments of this application.

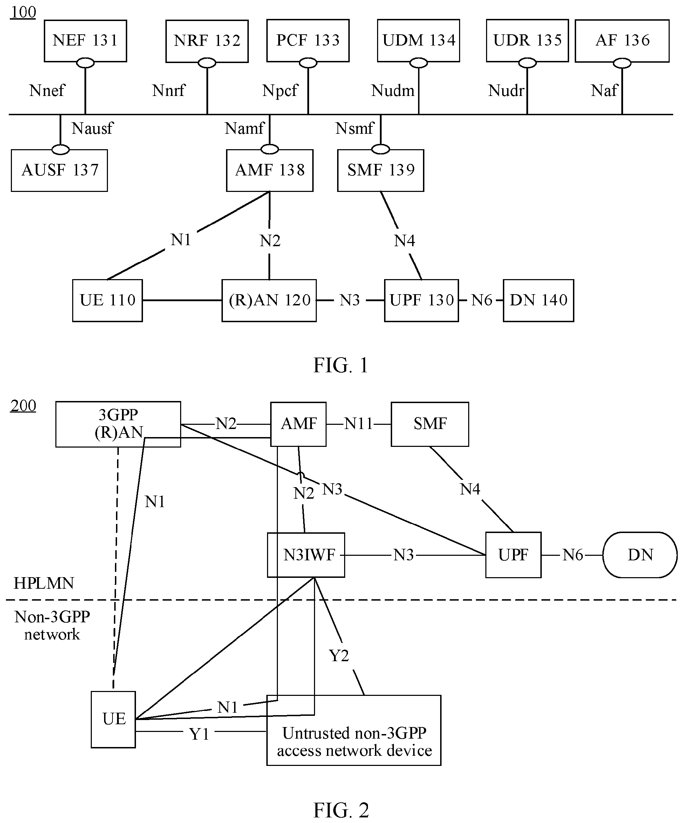

FIG. 1 is a diagram of a network architecture 100 applicable to this application. A 5G network architecture of a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include a UE 110, and the UE 110 is a device that provides voice and/or data connectivity for a user. The UE 110 in this application is a device having a wireless transceiver function, and may communicate with one or more core network (core network, CN) devices via an access network device (which may also be referred to as an access device) in the (radio) access network (R)AN 120. The UE 110 may also be referred to as an access terminal, a terminal, a subscriber unit, a subscriber station, a mobile station, a remote station, a remote terminal, a mobile device, a user terminal, a user agent, a user apparatus, or the like. The UE 110 may be deployed on land, including an indoor or outdoor device, or a handheld or vehicle-mounted device, may be deployed on a water surface (for example, on a ship), or may be deployed in the air (for example, on an airplane, a balloon, or a satellite). The UE 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the UE 110 may be a handheld device having a wireless communication function, a compute device, another device connected to a wireless modem, a vehicle-mounted device, a wearable device, an unmanned aerial vehicle device, a terminal in the internet of things or internet of vehicles, a terminal in any form in a 5G network or a future network, a relay user equipment, a terminal in a future evolved 6G network, or the like. The relay user equipment may be, for example, a 5G residential gateway (residential gateway, RG). A type or the like of the UE is not limited in embodiments of this application. For ease of description and differentiation, in embodiments of this application, a terminal device and a user equipment are separately used to represent two types of terminals. The terminal device may be a desktop computer, a printer, a portable notebook computer, or the like that is commonly used in enterprise office, and may be collectively referred to as an IoT device (or an end device). The user equipment may be the UE 110 described above. A difference between the terminal device and the user equipment lies in that the user equipment supports a cellular access technology and has a SIM card and a NAS signaling module, and the IoT device does not support the cellular access technology or the SIM card, does not have the NAS signaling module, and supports the non-3GPP access technology. The non-3GPP access technology includes a WLAN access technology, a Bluetooth access technology, a wired access technology, a fixed network access technology, or a short-distance access technology.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the UE 110, and may connect the terminal device to a node or device in a wireless network, and may also be referred to as a network device. The (R)AN 120 may be considered as a sub-network of the operator network, and is an implementation system between a service node in the operator network and the UE 110. For example, the UE 110 may be connected to the service node of the operator network via the (R)AN 120, to obtain a service provided by the service node. The (R)AN 120 includes but is not limited to a next generation node base station (next generation node base station, gNB) in a 5G system, an evolved NodeB (evolved NodeB, eNB) in LTE, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small base station device, a mobile switching center, a network device in a future network, or the like. The access network device may alternatively be a module or unit that completes a function of a base station, for example, includes a central unit (central unit, CU) and a distributed unit (distributed unit, DU). For example, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a MAC layer protocol, and a physical layer protocol. A specific technology and a specific device form that are used by the access network device are not limited in embodiments of this application. In systems using different radio access technologies, devices with functions of the access network device may have different names. For ease of description, in all embodiments of this application, the foregoing apparatuses that provide the wireless communication function for the UE 110 are collectively referred to as an access network device, or referred to as a RAN for short.

The CN part may include but is not limited to the following network functions (network functions, NFs): a user plane function UPF 130, a network exposure function (network exposure function, NEF) 131, a network function repository function (network function repository function, NRF) 132, a policy control function PCF 133, a unified data management UDM function 134, a unified data repository (unified data repository, UDR) function 135, an application function (application function, AF) 136, an authentication server function (authentication server function, AUSF) 137, an access and mobility management function AMF 138, and a session management function SMF 139.

A data network DN 140, also referred to as a packet data network (packet data network, PDN), is usually a network located outside the operator network, for example, a third-party network or an internet service. For ease of description, in embodiments of this application, the DN 140 is a network providing authentication, authorization, and accounting services, and a wired network includes fixed home network access and the like. A network side architecture is similar to an untrusted non-3GPP access architecture, and an untrusted non-3GPP access gateway (for example, a N3IWF shown in FIG. 2) is replaced with a trusted WLAN access gateway (trusted non-3GPP gateway function, TNGF), or is replaced with a wired network access gateway (wireline access gateway function, W-AGF). The access network device between the UE and the access gateway includes: a wireless access point (WLAN access point, WLAN AP), a wired network access network device (fixed Access network, FAN), a switch, a router, or the like.

In other words, an N3G access technology includes an access technology such as trusted WLAN access, untrusted WLAN access, or wired access. Regardless of the trusted non-3GPP access or the untrusted non-3GPP access, the 5GC may use a point-to-point interface protocol shown in FIG. 2, or use a service-based interface that is consistent with that of the 3GPP access core network architecture shown in FIG. 1.

In conclusion, the 5GC not only supports the UE in accessing the 5GC by using a 3GPP-defined radio technology (such as LTE or 5G RAN), but also supports the UE in accessing the 5GC by using a non-3GPP access technology (such as the N3IWF or a next generation access gateway (next generation packet data gateway, ngPDG)).

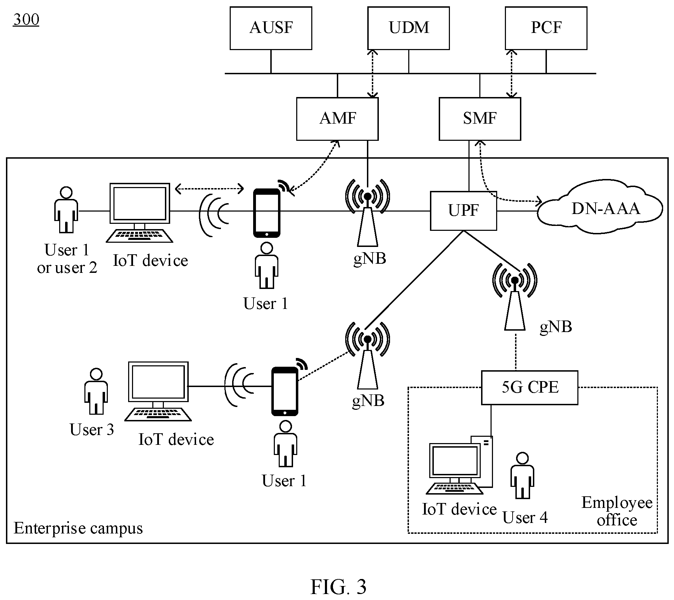

FIG. 3 is a diagram of another network architecture 300 applicable to this application. This application may be applied to enterprise campus 2B scenarios, where the enterprise campus is covered by a mobile operator network. Types of terminal devices in the enterprise campus are greatly different from types of terminal devices in a 2C scenario. For example, a terminal device commonly used in enterprise office is a desktop computer, a printer, a portable laptop, or the like, which are collectively referred to as an IoT device. In addition, the enterprise campus further includes a DN-AAA server and a 5GC. Control plane network elements of the 5GC include an AUSF, a UDM, a PCF, an AMF, an SMF, and the like. For specific descriptions of the network elements, refer to related descriptions in FIG. 1. For example, the IoT device may access the 5GC through a WLAN hotspot provided by a mobile phone (for example, a user 1). For example, the user 1 or a user 2 logs in to the IoT device, and the IoT device accesses the AMF in the 5GC through the WLAN hotspot provided by the mobile phone used by the user 1. For another example, a user 3 logs in to the IoT device, and the IoT device establishes a communication connection with a gNB through the WLAN hotspot provided by the mobile phone used by the user 1, and accesses the UPF, the SMF, the DN-AAA, or the like in the 5GC. Alternatively, the IoT device may access the 5GC through a WLAN or a wired access technology provided by 5G customer-premises equipment (customer-premises equipment, CPE). For example, a user 4 logs in to the IoT device, and the IoT device accesses the UPF, the SMF, the DN-AAA, or the like in the 5GC through a WLAN hotspot provided by the 5G CPE. The 5G CPE may be deployed indoors (for example, in an employee office), and may be connected to the IoT device through a WLAN interface or a wired interface. Alternatively, the 5G CPE may establish a communication connection with the IoT device by using a radio access technology. It should be understood that the CPE is a mobile signal access device that receives a mobile signal and forwards the mobile signal by using a wireless Wi-Fi number, and is usually located at customer premises, and may be a telephone or another service.

It is considered that a UE in a to consumer 2C scenario is supported to access the 5GC currently, the UE is a terminal device that supports a SIM card and a NAS signaling module, for example, a smartphone. With the development of a mobile network, a to business 2B scenario can also be gradually deployed by the mobile operator. Different from the UE, the loT device in an enterprise usually supports a WLAN access technology or a Bluetooth access technology. Because the IoT device does not support cellular access and does not have a SIM card or a NAS signaling module, the IoT device cannot access the 5GC based on an existing solution. In other words, the mobile operator cannot provide connectivity services for the IoT devices based on the 5GC. In addition, the 5GC authenticates and authorizes the UE based on a UE authentication vector, where the UE authentication vector is carried in the SIM card of the UE. The IoT device is a terminal device without the SIM card. In a scenario in which the IoT device accesses a network, a network side cannot authenticate and authorize the IoT device, but needs to authenticate and authorize a user of the IoT device. In other words, an attribute of the IoT device is not a factor for determining whether the IoT device can access the 5GC. For example, an enterprise employee uses a laptop to access an enterprise campus network. Regardless of the laptop used by the employee, the employee is to be successfully authenticated and authorized provided that the employee is an authorized user of such an enterprise. Therefore, in a scenario in which the IoT device accesses the 5GC, the network side needs to authenticate and authorize the user of the IoT device instead of authenticating and authorizing the IoT device, to prevent an unauthorized user from accessing the network or maliciously attacking the network, to ensure network security.

In view of this, embodiments of this application provide a communication method and apparatus, to determine, by authenticating and authorizing user identity information of a terminal device (or a user equipment), whether to establish or modify a session associated with the user identity information, to avoid or reduce potential security risks.

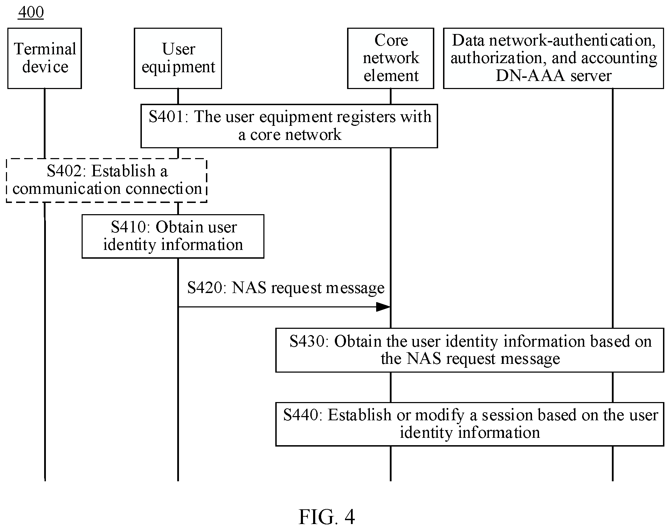

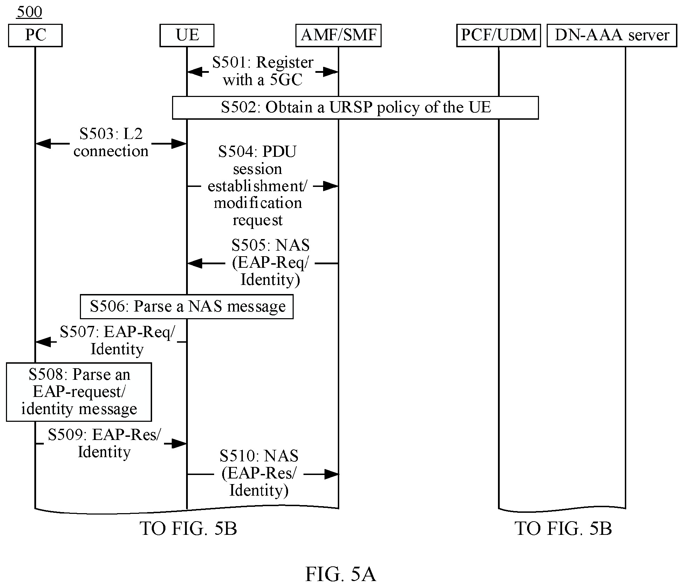

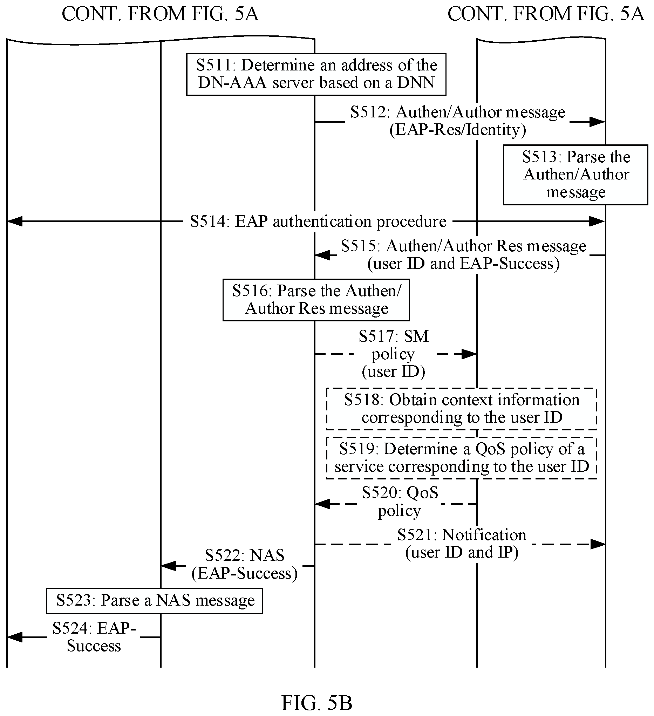

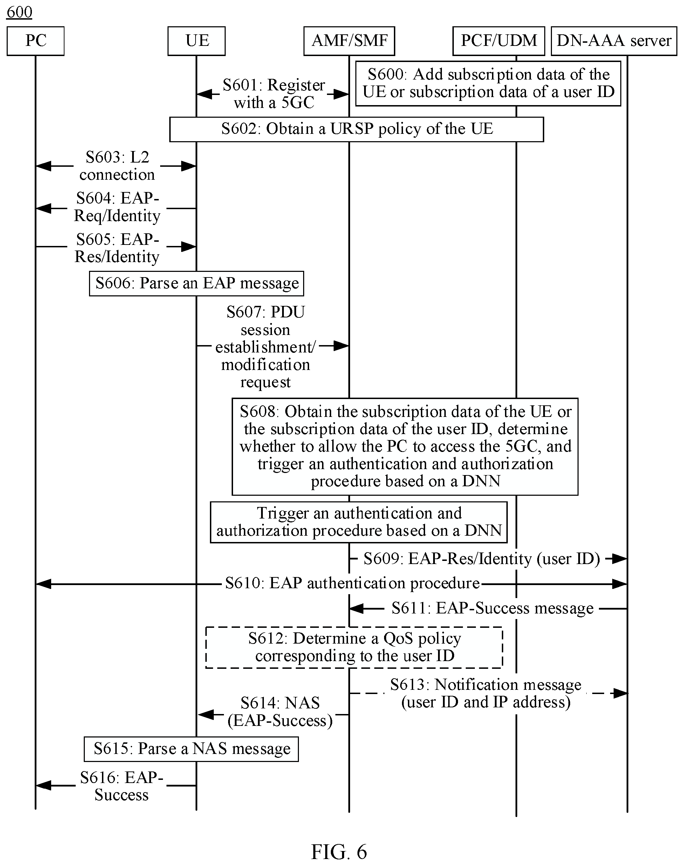

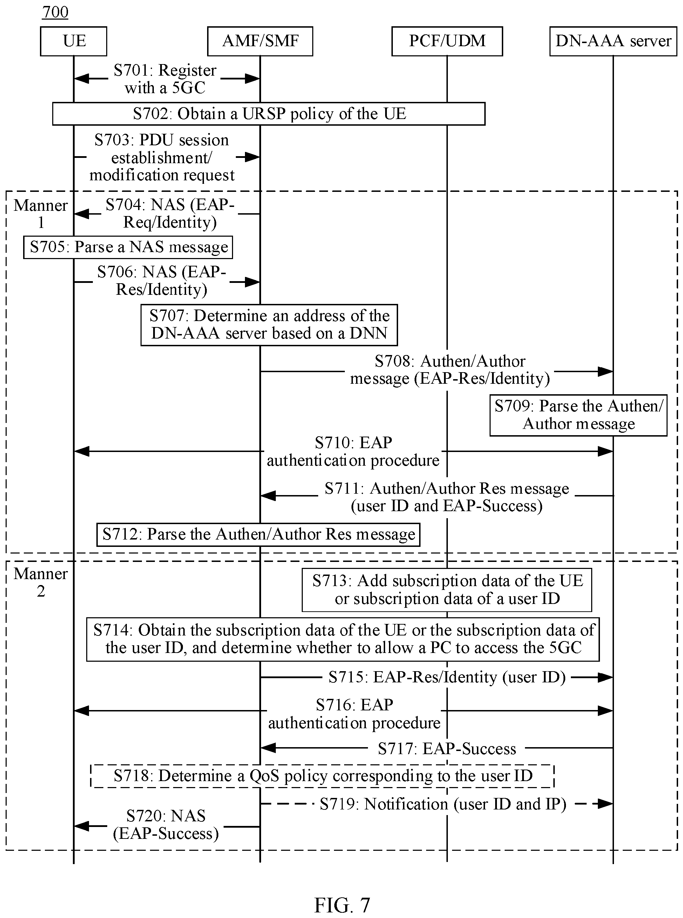

The following describes, in detail with reference to the accompanying drawings, the communication method provided in embodiments of this application. Embodiments provided in this application are applicable to any communication scenario in which a transmitter device communicates with a receiver device, for example, may be used in the communication system shown in FIG. 1 to FIG. 3. To implement communication between the core network element in the RAN service-based architecture and the communication apparatus, this application proposes the following methods shown in FIG. 4 to FIG. 7. It should be understood that the method embodiments shown in FIG. 4 to FIG. 7 may be combined with each other, and steps in the method embodiments shown in FIG. 4 to FIG. 7 may be referenced with each other. For example, in embodiments of this application, method embodiments shown in FIG. 5A and FIG. 5B to FIG. 7 may be considered as possible implementations of implementing functions of the method embodiment shown in FIG. 4. FIG. 5A and FIG. 5B mainly describe a case in which a DN-AAA server sends user identity information to a core network element to perform authentication and authorization, and FIG. 6 mainly describes, based on extension of a NAS message, that for a terminal device, a user equipment sends user identity information to a core network element to perform authentication and authorization. In addition, FIG. 7 mainly describes a case in which a user equipment accesses a core network by using user identity information.

FIG. 4 is a schematic flowchart of a communication method 400 according to an embodiment of this application. As shown in FIG. 4, the method procedure may be performed by a terminal device, a user equipment, a core network element, and a data network-authentication, authorization, and accounting server, or may be performed by a module and/or a component (for example, a chip or an integrated circuit) that have a corresponding function and that are installed in the terminal device, the user equipment, the core network element, and the data network-authentication, authorization, and accounting server. This is not limited in this application. For ease of description, the following uses the terminal device, the user equipment, the core network element, and the data network-authentication, authorization, and accounting server as execution bodies for description. The method includes a plurality of steps below. For a part that is not described in detail, refer to an existing protocol.

S410: The user equipment obtains user identity information, where the user identity information indicates a user of the user equipment.

It should be understood that the user of the user equipment includes: The user of the user equipment is an end-user using the user equipment, and the user identity information is user identity information of the end-user using the user equipment; or the terminal device is in communication connection with the user equipment, the user of the user equipment is an end-user using the terminal device, and the user identity information is user identity information of the end-user using the terminal device. The terminal device is a terminal device that supports a non-3GPP access technology and that does not support NAS signaling. In other words, the terminal device may not have a cellular access capability, and does not support NAS or a SIM card.

For example, the terminal device may be an IoT device (for example, a personal computer (Personal Computer, PC)), and the user equipment may be a UE (for example, a mobile phone). A difference between them lies in that the user equipment supports cellular access, a SIM card, and a NAS signaling module, while the terminal device does not support cellular access, a SIM card, or a NAS signaling module. In other words, the terminal device is a terminal device that does not support a SIM card or a NAS signaling module when accessing a core network by using a 3GPP technology. It should be understood that the terminal device supports the non-3GPP access technology, and the non-3GPP access technology includes a WLAN access technology, a Bluetooth access technology, a wired access technology, a fixed network access technology, or a short-range access technology.

In an example, the user equipment sends a request message, for example, an EAP request message (for example, an EAP-identity request message), to the terminal device, where the request message is used to obtain the user identity information. Correspondingly, the user equipment receives a reply message from the terminal device, where the reply message includes the user identity information, and the user identity information indicates an end-user using the terminal device.

In another example, the user equipment locally obtains the user identity information, where the user identity information indicates the end-user using the user equipment.

S420: The user equipment sends a NAS request message to the core network element based on the user identity information. Correspondingly, the core network element receives the NAS request message from the user equipment. The NAS message is used to request to establish or modify a session.

It should be understood that establishment or modification of the session is triggered based on the user identity information. The user identity information is verified to determine whether the session is successfully established or modified. In this embodiment of this application, if the session fails to be established or modified, the terminal device cannot access a 5GC.

For example, the NAS request message includes a data network name DNN and slice information.

It should be understood that the NAS request message further includes identification information of the user equipment and/or the user identity information (User ID). It should be understood that the user identity information indicates the end-user using the terminal device, and the user identity information is different from identification information of the terminal device. The identification information of the terminal device may be a device ID, or may be address information of the device, for example, an IP address or a MAC address, or may be another representation form used to identify the terminal device. The user identity information may be identity information of a user to which the terminal device belongs, or may be identification information of a user (in other words, identity information of an end-user using the IoT device), for example, information such as an employee ID of an employee, a user name, or a user identity card number, or may be another representation form used to identify the end-user using the terminal device. In other words, the user identity information is used to identify the user, and represents a "person", while the identification information of the terminal device is used to identify the device.

Optionally, the NAS request message may be a UL NAS transport message or a PDU session establishment/modification request message. For example, the NAS request message sent by the user equipment and received by an AMF may be the UL NAS transport message, and the message includes a session establishment/modification request message (PDU session establishment/modification request). Then the AMF continues to send the session establishment/modification request message to an SMF, and the SMF is responsible for managing establishment, modification, release, and the like of a PDU session.

Optionally, when the UL NAS transport message includes the user identity information, the AMF obtains the user identity information from the UL NAS transport message, and then the AMF continues to send the user identity information to the SMF through an interface between the AMF and the SMF. Alternatively, the PDU session establishment/modification request message includes the user identity information, the AMF continues to forward the PDU session establishment/modification request message to the SMF through an interface between the AMF and the SMF, and the SMF obtains the user identity information from the PDU session establishment/modification request message.

For example, a PDU session establishment/modification procedure includes: The user equipment sends the uplink NAS transport message to the AMF, where the message carries the PDU session establishment/modification request message, and the AMF forwards a PDU session establishment/modification request to the SMF. The uplink NAS transport message carries the DNN and the slice information. The AMF selects the SMF and sends the DNN and the slice information to the SMF. The SMF is responsible for managing establishment, modification, maintenance, release, and the like of the PDU session of the terminal device. For a specific implementation, refer to the existing protocol. Further, the terminal device or the user equipment may communicate with the core network element based on the PDU session, to obtain connectivity services provided by the core network.

Optionally, the user identity information (User ID) may be limited to being on the terminal device (the IoT device or a device that does not have a 5GC access capability), or may not be limited to being on the terminal device. For example, when the user logs in to a specific app on the user equipment (a mobile phone) by using the user ID, the 5GC may also determine, based on the user ID, whether to allow the user to use the app. Therefore, the user identity information may be used on a device that does not support the 5GC (non-5GC capable device) (for example, the IoT device), or may be used on a device that supports the 5GC (5GC capable device) (for example, the UE). This is not limited in this application.

In other words, the technical solutions of this application are applicable to a scenario in which the terminal device (the IoT device) requests to access the 5GC via the user equipment, and the 5GC determines, by authenticating and authorizing the identity information of the end-user using the terminal device, whether to establish or modify a session corresponding to the user identity information, that is, whether to allow the terminal device to access the 5GC, or are applicable to a scenario in which the user equipment requests to access the 5GC by including the user identity information, and the 5GC determines, by authenticating and authorizing the identity information of the end-user using the user equipment, whether to establish or modify a session corresponding to the user identity information, that is, whether to allow the user equipment to access the 5GC.

Before step S410 is performed, the method 400 may further include S401 and S402.

S401: The user equipment registers with the core network.

For example, the user equipment sends an N1 message (N1 message) to the AMF, to request to register with the 5GC. For example, the N1 message is a registration request message, and carries a subscription concealed identifier (Subscription Concealed Identifier, SUCI) or a 5G globally unique temporary identifier (5G Globally Unique Temporary Identifier, 5G-GUTI) of the user equipment. Correspondingly, the AMF initiates identity verification to the user equipment, for example, by using a 5G authentication and key agreement (5G Authentication and Key Agreement, 5G-AKA) authentication method or an extensible authentication protocol-authentication and key agreement (Extensible Authentication Protocol-Authentication and Key Agreement, EAP-AKA') authentication method. The user equipment can complete a registration procedure only when the user equipment is successfully authenticated and authorized. For a specific implementation, refer to the existing protocol.

It should be noted that after the user equipment registers with the 5GC, the user equipment may obtain a user equipment route selection policy (UE route selection policy, URSP) from the core network element. For example, a PCF sends the URSP policy to the AMF, and then the AMF sends the URSP policy to the user equipment based on the NAS message. Further, the user equipment may use the URSP to determine a specific path through which data traffic of the user equipment is sent. For example, the user equipment may select, according to a URSP rule, an existing session connected to a specific data network (data network, DN) to send the data traffic of the user equipment; or the user equipment may send the data traffic of the user equipment by establishing a new session in a specific network slice.

For example, the URSP policy includes an access point identifier and/or the user identity information. The access point identifier indicates an access point provided by the user equipment. For example, the access point identifier may be at least one of a service set identifier (service set identifier, SSID), a homogenous extended service set identifier (homogenous extended service set identifier, HESSID), and a basic service set identifier (basic service set identifier, BSSID). Optionally, a quantity and a specific representation form of the access point identifier and/or the user identity information carried in the URSP policy are not limited in this application.

Optionally, the URSP policy further includes indication information #1, and the indication information #1 indicates that when the terminal device performs access via the access point indicated by the access point identifier, the user equipment establishes/modifies an independent PDU session for the terminal device. Alternatively, the indication information #1 indicates that the user equipment establishes/modifies a PDU session for the terminal device corresponding to the user identity information (for example, indicates the end-user using the terminal device, or a user logs in to the terminal device by using the user identity information). It should be noted that when the URSP policy does not include the indication information #1, the access point identifier or the user identity information may be used as the indication information #1. In this case, in addition to a meaning of the access point identifier or the user identity information, the access point identifier or the user identity information further includes a function of the indication information #1.

Optionally, when different terminal devices perform access via the access point in the URSP policy, the user equipment initiates different session establishment/modification request procedures. Alternatively, when the user equipment obtains different user identity information, the user equipment initiates different session establishment/modification request procedures. For example, when initiating different session establishment/modification request procedures, the user equipment includes identifiers of different terminal devices in different session establishment/modification request messages, and/or includes different DNNs or slice information in session establishment requests for different terminal devices, and/or includes different session identifiers in session establishment/modification requests for different terminal devices, to ensure that different terminal devices are in one-to-one correspondence with different sessions.

S402: Optionally, the terminal device is in communication connection with the user equipment.

For example, the user enables a Wi-Fi hotspot function of the user equipment. It is assumed that an access point identifier of the Wi-Fi hotspot is A. The access point identifier A may be identification information set at a user granularity, for example, an access point identifier randomly set by the user, or may be identification information set at a 2B service granularity, for example, a company name serving as the access point identifier. The terminal device (for example, a device like a PC, a portable computer, or an iPad) scans available Wi-Fi hotspots, selects the Wi-Fi hotspot whose access point identifier is A, and initiates a connection procedure to the Wi-Fi hotspot. For a specific implementation, refer to the existing protocol, to be specific, the terminal device completes establishment of an L2 connection with the user equipment.

The following describes a specific implementation in which the user equipment sends the NAS request message to the core network element in step S420.

For example, after the user equipment establishes the L2 connection with the terminal device, the user equipment sends the NAS request message to the core network element according to the URSP policy.

In an implementation, when an access point used by the terminal device for the communication connection with the user equipment matches the access point indicated by the access point identifier included in the URSP policy, the user equipment sends the NAS request message to the core network element. For example, the terminal device connects to the user equipment by using the Wi-Fi hotspot whose access point identifier is A, where the access point identifier A is included in the URSP policy. In this case, the user equipment triggers establishment/modification of the PDU session for the terminal device.

In another implementation, the user equipment serving as an authenticator sends an EAP-request/identity message to the terminal device, to request to authenticate and authorize the terminal device; and correspondingly, receives an EAP-response/identity message from the terminal device. If user identity information carried in the EAP-response/identity message matches the user identity information included in the URSP policy, the user equipment sends the NAS request message to the core network element. For example, if the EAP-response/identity message carries user identity information #1, and the user identity information #1 is included in the URSP policy, the user equipment triggers the establishment/modification of the PDU session for the terminal device. In other words, when the terminal device is successfully authenticated and authorized by the user equipment, the user equipment sends the NAS request message to the core network element.

In still another implementation, the user equipment triggers, based on indication information #1 carried in the URSP policy, the establishment/modification of the PDU session for the terminal device.

Optionally, the user equipment may store a correspondence between an L2 connection between the user equipment and the terminal device and a PDU session initiated by the user equipment for the terminal device, and/or the user equipment may store a correspondence between a terminal device and a PDU session. For example, the user equipment allocates a PDU session ID to the PDU session, and the user equipment may store a correspondence between an L2 connection and a PDU session ID. The L2 connection between the user equipment and the terminal device may be a MAC address identifier of the terminal device or an L2 identifier of the terminal device. In other words, the user equipment may store a correspondence between a MAC address of the terminal device and a PDU session ID, or a correspondence between an L2 identifier of the terminal device and a PDU session ID.

S430: The core network element obtains the user identity information based on the NAS request message.

### Manner 1:

For example, the core network element receives the user identity information from the user equipment based on the NAS request message. For example, the user identity information is carried in the NAS request message in step S420.

For example, after step S402 is performed, the user equipment serving as an authenticator sends the EAP-request/identity message to the terminal device, to request to authenticate and authorize the terminal device; and correspondingly, the terminal device parses the EAP-request/identity message, and returns an EAP-response/identity message to the user equipment. The EAP-response/identity message carries the user identity information user ID. Further, the user equipment triggers, based on the user identity information user ID and the URSP policy, initiating a session establishment/modification procedure for the terminal device. For example, the UE sends the UL NAS transport message to the AMF, where the UL NAS transport message carries a PDU session establishment request message, and the UL NAS transport message and/or the PDU session establishment request message carry/carries the user ID. Correspondingly, after obtaining the UL NAS transport message, the AMF continues to forward the PDU session establishment request message to the SMF, that is, the core network element obtains the user ID of the terminal device.

### Manner 2:

For example, the core network element receives the user identity information from the DN-AAA server based on the NAS request message.

Optionally, the NAS request message may be the UL NAS transport message or the PDU session establishment/modification request message. For example, the AMF receives the UL NAS transport message sent by the user equipment, and the UL NAS transport message may carry a PDU session establishment/modification request message. The AMF continues to send the PDU session establishment/modification request message to the SMF, and the SMF is responsible for managing establishment, modification, release, and the like of the PDU session.

First, in response to the NAS request message received from the user equipment, the core network element triggers an authentication and authorization procedure for the terminal device based on the DNN carried in the NAS request message. In other words, the core network element sends the NAS message to the user equipment, where the NAS message carries the EAP-request/identity message, to request to authenticate and authorize the terminal device.

For example, the SMF first sends the EAP-request/identity message to the AMF, and then the AMF encapsulates the EAP-request/identity message in the NAS message and sends such a NAS message to the user equipment. Correspondingly, the user equipment receives and parses the NAS message to obtain the EAP-request/identity message, and then the user equipment may determine, based on the locally stored correspondence between an L2 connection and a PDU session or the locally stored correspondence between a terminal device and a PDU session (for example, the correspondence between a MAC address of the terminal device and a PDU session ID), and PDU session information (for example, the PDU session ID) carried in the NAS message, that the PDU session is established/modified for the terminal device, and forwards the EAP-request/identity message obtained through parsing to the terminal device based on the MAC address of the terminal device. For example, the user equipment may send the EAP-request/identity through the L2 connection established between the user equipment and the terminal device, or the user equipment may send the EAP-request/identity over a WLAN air interface between the user equipment and the terminal device. Correspondingly, after parsing the EAP-request/identity message, the terminal device returns the EAP-response/identity message to the user equipment, where the EAP-response/identity message carries the user identity information user ID. Correspondingly, the user equipment encapsulates the received EAP-response/identity message into the NAS message, and sends such a NAS message to the core network element, where the EAP-response/identity message carries the user ID. For example, the user equipment sends the NAS message to the AMF, where the message carries the EAP-request/identity message, and then the AMF forwards the EAP-request/identity message to the SMF. It should be understood that the EAP-response/identity message may be understood as being sent by the terminal device to the core network element via the user equipment. In other words, the EAP-response/identity message is transparently transmitted to the core network element via the user equipment, and the user equipment does not parse the EAP-response/identity message, and therefore, does not know the user identity information carried in the EAP-response/identity message.

Further, after receiving the EAP-response/identity message, the core network element determines an address of the DN-AAA server based on the DNN carried in the NAS request message in step S420, and sends an authentication and authorization message to the DN-AAA server, where the message carries the user identity information, to request the DN-AAA server to perform an authentication and authorization procedure on the terminal device based on the identity information. After parsing the authentication and authorization message, the DN-AAA server obtains corresponding context information based on the user identity information, and performs an authentication procedure on the terminal device, to determine whether to establish or modify a session.

For example, the SMF sends the authentication and authorization message to the DN-AAA server through an interface between the SMF and the DN-AAA, where the message carries the received EAP-response/identity message. Alternatively, the SMF sends the authentication and authorization message to a UPF, and then the UPF forwards the authentication and authorization message to the DN-AAA server. This is not limited in this application. In addition, the authentication and authorization message may further include identification information of the user equipment, for example, a GPSI identifier of the user equipment or an SUPI identifier of the user equipment. Optionally, the address of the DN-AAA server may be obtained by the core network element from subscription data of the DNN, or may be obtained from the user equipment. This is not limited in this application. Correspondingly, the DN-AAA server parses the authentication and authorization message to obtain the identification information of the user equipment and the user ID included in the EAP-response/identity. The DN-AAA searches for, based on the user ID, the corresponding context information, performs an authentication and authorization procedure based on the user ID and a user password of the user ID, and determines whether to establish or modify a session. For example, the DN-AAA interacts with the terminal device to obtain the user password corresponding to the user ID, and queries whether the user ID and the user password of the user ID match the context information of the user ID. If the user ID and the user password of the user ID match the context information of the user ID, the DN-AAA may determine to establish or modify a session, and send the user identity information to the core network element. If the user ID and the user password of the user ID do not match the context information of the user ID, the DN-AAA rejects the session establishment/modification request, in other words, rejects to provide an access service for the terminal device or the user equipment. For a specific implementation of the authentication and authorization procedure, refer to the existing protocol.

For example, the context information of the user ID (or subscription data of the user ID) includes one or more of the following:

### (1) User identity information (User ID)

For example, the user identity information indicates an end-user using the terminal device, or the user identity information is identity information of a user to which the terminal device belongs, or may be user identity information, for example, information such as an employee ID of an employee, a user name, or a user identity card number. It should be understood that the user identity information is used to identify a user and represents a "person", but is not used to identify a device.

### (2) User password (password)

For example, the user password is typically used together with the user identity information to ensure information confidentiality, and a password security authorization function is used to implement information authenticity, data integrity, and non-repudiation of behavior, to avoid or reduce potential network security risks.

### (3) User equipment identifier list (for example, allowed UE ID list)

For example, the user equipment identifier list includes an identifier of at least one user equipment, indicating an identifier of a user equipment to which access is allowed with the user identity information.

### (4) First indication information (for example, any UE ID indication)

For example, the first indication information indicates that access is allowed via any user equipment for the user identity information.

### (5) User level

For example, the user level indicates a service level of the user, for example, a gold user, a silver user, or a bronze user.

### (6) QoS parameter

For example, the QoS parameter indicates QoS parameter information of a data flow of a session, for example, including at least one of parameters such as a maximum bandwidth of a service, a guaranteed bandwidth of a service, a delay, and a packet loss rate.

Optionally, the NAS request message may alternatively not include the data network name. In this case, after receiving the NAS request message, the AMF or the SMF may determine subscription data of the user equipment and/or subscription data of the user identity information based on the identification information of user equipment and/or the user identity information carried in the NAS request message, obtain a default data network name in the NAS request message from the subscription data of the user equipment or the subscription data of the user identity information, and then the AMF or the SMF may trigger an authentication and authorization procedure for the user equipment or the terminal device based on the data network name. For a specific implementation, refer to the foregoing related descriptions. Details are not described herein again.

For example, the subscription data of the user equipment or the subscription data of the user identity information may be configured by a core network management system in a policy control function network element or a unified data management function network element, or sent by an application function network element to a policy control function network element or a unified data management function network element via a network exposure function network element, and then the core network element may query the policy control function network element or the unified data management function network element by including the identification information of the user equipment and/or the user identity information, to obtain the subscription data of the user equipment or the subscription data of the user identity information.

S440: The core network element establishes or modifies a session based on the user identity information.

The following separately describes how the core network element and the DN-AAA server authenticate and authorize the user identity information of the terminal device to determine whether to establish or modify the session.

### Manner 1:

For example, the core network element determines, based on the user identity information (User ID) in the NAS request message in S420 and the obtained subscription data of the user equipment or the subscription data of the user identity information, whether to establish or modify the session. It should be understood that, when determining to establish or modify the session, the user equipment or the terminal device may access the core network.

Optionally, the subscription data of the user equipment or the subscription data of the user identity information may be configured by the core network management system in the UDM or the PCF, or may be sent by the AF to the UDM or the PCF via the NEF. For example, the AMF sends a subscription request message to the UDM/PCF, where the message carries an identifier of the user equipment (for example, a UE ID) and/or a user ID, to obtain the subscription data of the user equipment or the subscription data of the user identity information.

For example, the subscription data of the user equipment (or the context information of the user equipment) includes one or more of the following: the user identity information, the user password, an allowed user ID list (that is, the user identity information list), the any user ID indication (that is, third indication information), the user level, and the QoS parameter. The allowed user ID list includes at least one user ID, indicating user ID information for which access to the user equipment is allowed. The any user ID indication indicates that access to the user equipment is allowed for any user ID. For meanings of other parameters, refer to the foregoing related descriptions of the subscription data of the user ID. Details are not described herein again.

In an implementation, when the user identity information is included in the allowed user ID list, or the subscription data of the user equipment includes the any user ID indication, the core network element establishes or modifies the session. Alternatively, when the user identity information is not included in the user identity information list, and the subscription data of the user equipment does not include the any user ID indication, the core network element may send a NAS response message to the user equipment, where the NAS response message indicates that the session fails to be established or modified. Optionally, the NAS response message may carry a failure cause value, where the failure cause value indicates that the user identity information is not included in the user identity information list and the subscription data of the user equipment does not include the any user ID indication, that is, the core network element rejects to establish or modify a session corresponding to the user ID, that is, the terminal device or the user equipment is not allowed to access the core network. For example, the allowed user ID list includes a user ID #1 and a user ID #2, indicating that for the user ID #1 and the user ID #2, access to the 5GC via the user equipment is allowed. In this case, if the user ID in the NAS request message is the same as the user ID #1 or the user ID #2, the SMF establishes or modifies the session; or if the user ID in the NAS request message is the same as a user ID #3, the SMF determines not to allow the terminal device to access the 5GC. Optionally, the SMF may send a reject message to the user equipment, where the message carries a reject cause value, to reject to provide an access service for the terminal device. For another example, if the subscription data of the user equipment includes the any user ID indication, it indicates that for any user ID, access to the 5GC via the user equipment is allowed. In this case, provided that the NAS request message carries the user ID, the SMF may establish or modify the session used by the terminal device to access the 5GC via the user equipment.

In another implementation, when the identifier of the user equipment is included in the allowed UE ID list, or the subscription data of the user ID includes the any UE ID indication, the session is established or modified. Alternatively, when the identifier of the user equipment is not included in the user equipment identifier list, and the subscription data of the user ID does not include the any user ID indication, the core network element may send a NAS response message to the user equipment, where the NAS response message indicates that the session fails to be established or modified. Optionally, the NAS response message may carry a failure cause value, where the failure cause value indicates that the identifier of the user equipment is not included in the user equipment identifier list and the subscription data of the user ID does not include the any user ID indication, that is, the core network element rejects to establish or modify a session corresponding to the user ID, that is, the terminal device or the user equipment is not allowed to access the core network. For example, the allowed UE ID list includes an identifier of a user equipment 1 and an identifier of a user equipment 2, indicating that for the user ID, access to the 5GC via the user equipment 1 or the user equipment is allowed. If the identifier of the user equipment in the NAS request message is the same as the identifier of the user equipment 1 or the identifier of the user equipment 2, the SMF determines to allow the terminal device to access the 5GC; or if the identifier of the user equipment in the NAS request message is the same as an identifier of a user equipment 3, the SMF determines not to allow the terminal device to access the 5GC. Optionally, the SMF may send a reject message to the user equipment, where the message carries a reject cause value, to reject to provide an access service for the terminal device. For another example, if the subscription data of the user ID includes the any UE ID indication, it indicates that for the user ID, access to the 5GC via any user equipment is allowed. In this case, provided that the NAS request message carries the identifier of the user equipment, the SMF may determine to allow the user equipment to access the 5GC.

### Manner 2:

For example, the DN-AAA server searches for the subscription data of the user ID based on the user ID, and determines, based on the subscription data of the user ID, whether to establish or modify the session, that is, determines whether to allow the user equipment or the terminal device to access the core network element. For a specific implementation, refer to the authentication and authorization procedure of the core network element above.

It should be noted that a manner of authenticating and authorizing the user may be usually based on the user name and the user password. For example, the user name is an employee ID of an enterprise employee, and the user password is a login password set personally. For example, the enterprise employee uses a PC to access an enterprise campus network. Regardless of the PC used by the employee, the employee is to be successfully authenticated and authorized provided that the employee is an authorized user of such an enterprise.

Further, for the terminal device whose user identity information is successfully authenticated and authorized, in response to the authentication and authorization message (that is, a first message) received from the core network element, the DN-AAA server returns an authentication and authorization response message to the core network element, where the message carries the user identity information and an EAP-Success message (that is, a second message), to indicate that the user identity information is successfully authenticated and authorized. For example, the DN-AAA server sends the authentication and authorization message to the SMF through an interface between the SMF and the DN-AAA server, or sends the authentication and authorization message to the SMF via the UPF.

Optionally, the authentication and authorization message may further include one or more of the following parameters: an IP address, the user level, the QoS parameter, and indication information #2 (that is, second indication information). The indication information #2 indicates to collect statistics on a data flow or a service flow of a session, for example, include at least one of traffic statistics, duration statistics, and statistics on accessed target websites. For meanings of other parameters, refer to the foregoing related descriptions.

Optionally, the core network element may determine, based on an IP address that is of a session and that is carried in the first message, a session used by the terminal device or the user equipment to access the core network. Subsequently, the terminal device or the user equipment may access the core network based on the IP address and obtain a service provided by the core network.

Optionally, the core network element may determine, based on the second indication information carried in the first message, to collect statistics on the service flow or the data flow performed after the terminal device or the user equipment accesses the core network. For example, after the terminal device or the user equipment accesses the core network, the core network element collects statistics on information such as one or more web pages or applications that the terminal device or the user equipment logs in to, and duration or traffic of using the web pages or applications, so that a core network side accurately schedules and allocates resources for the terminal device or the user equipment in real time, to ensure a network transmission bandwidth, reduce a network transmission delay, improve network resource utilization, and the like.

It should be noted that the foregoing technical solution is described in a scenario in which the terminal device requests to access the 5GC via the user equipment, and the 5GC determines, by authenticating and authorizing the identity information of the end-user using the terminal device, whether to establish or modify the session corresponding to the user identity information, that is, whether to allow the terminal device to access the 5GC. Optionally, this application is also applicable to a scenario in which the user equipment requests to access the 5GC by including the user identity information, and the 5GC determines, by authenticating and authorizing the identity information of the end-user using the user equipment, whether to establish or modify the session corresponding to the user identity information, that is, whether to allow the user equipment to access the 5GC. For a specific implementation, refer to the following method 700. Details are not described herein. It should be understood that, in comparison with an existing solution in which the identifier of the user equipment (for example, the UE ID) is verified to determine whether the user equipment is allowed to access the 5GC, authentication and authorization on the user identity information may be additional verification based on verification on the identifier of the user equipment. This is more secure, and verification on the user identity information may prevent an unauthorized user from using the 5GC, or prevent an unauthorized user from maliciously attacking the network, or may cause the 5GC to determine a specific service used by a specific user, to facilitate service management and control.

Optionally, when the user identity information is successfully authenticated and authorized, the method 400 further includes: The core network element obtains an IP address corresponding to the user identity information.

In an implementation, the IP address is carried in the authentication and authorization message sent by the DN-AAA to the core network element. In other words, the DN-AAA server allocates the IP address to the user identity information, and delivers the IP address to the core network element.

In another implementation, if the core network element does not receive the IP address allocated by the DN-AAA server, the core network element may allocate the IP address to the user identity information, or the UPF allocates the IP address. For a specific implementation, refer to the existing protocol. Optionally, the SMF sends a notification message to the DN-AAA server, where the notification message carries the user identity information and the IP address. After parsing and obtaining the IP address, the DN-AAA server stores the IP address in the context information corresponding to the user ID. In other words, the core network element or the UPF allocates the IP address to the user identity information.

It should be understood that the IP address usually represents a unique address, and is used to identify a device on the internet or a local network, that is, the terminal device.

Optionally, when the user identity information is successfully authenticated and authorized, the 5GC may perform differentiated management and control based on a user attribute (that is, the user identity information (User ID) of the terminal device), or perform differentiated service QoS control based on different user levels. In other words, the method 400 further includes: The core network element obtains policy information.

In an implementation, the core network element determines, based on the user level and/or the QoS parameter, the policy information corresponding to the user identity information.

In another implementation, the core network element sends a request message to the PCF/UDM, to request to obtain the policy information corresponding to the user identity information, where the request message includes the user identity information. Correspondingly, the PCF/UDM sends the policy information to the core network element. Optionally, the policy information is determined based on the user level and/or the QoS parameter corresponding to the user identity information.

The policy information may be a QoS policy, and includes at least one of a maximum bandwidth of a service, a guaranteed bandwidth of a service, a delay, a packet loss rate, and traffic, for example, a quantity of lost packets reported to the core network at an interval of a T1 time period, and information statistics, such as a duration, traffic, and a bandwidth used by the terminal device to access a target website, that are detected by the core network at an interval of a T2 time period, to accurately schedule and allocate resources for the terminal device in real time, ensure a network transmission bandwidth, reduce a network transmission delay, improve network resource utilization, and the like. In addition, for a specific implementation in which the core network element or the PCF/UDM determines the policy information based on the user level and/or the QoS parameter, refer to the existing protocol. This is not limited in this application.

Optionally, further, when the user identity information is successfully authenticated and authorized, that is, after the core network element receives the EAP-Success message from the DN-AAA server, the core network element continues to perform a subsequent PDU session establishment/modification procedure. For example, the SMF sends an PDU session establishment/modification accept message to the AMF, where the message carries the EAP-Success message. The AMF may encapsulate the PDU session establishment/modification accept message in a DL NAS transport message and send such a DL NAS transport message to the user equipment. Then, the user equipment parses the DL NAS transport message and the PDU session establishment/modification accept message to obtain the EAP-Success message. Finally, the user equipment may determine, based on the locally stored correspondence between a MAC address and a PDU session ID and a PDU session ID carried in the DL NAS transport message or the PDU session establishment/modification accept message, that such a PDU session is established/modified for the terminal device, and therefore forward the EAP-Success message to the terminal device, so that the terminal device may request, based on the EAP-Success message, the core network to provide the access service.

In the technical solutions of this application, for a scenario in which the terminal device accesses the 5GC via the user equipment or a scenario in which the user equipment accesses the 5GC, the 5GC determines, by authenticating and authorizing the user identity information of the terminal device or the user equipment, whether to allow the terminal device or the user equipment to access the 5GC, that is, whether to provide a network access service, service management and control, and the like for the terminal device or the user equipment. In addition, authentication and authorization on the user identity information can avoid or reduce potential security risks.

FIG. 5A and FIG. 5B are a schematic flowchart of a communication method 500 according to an embodiment of this application. As shown in FIG. 5A and FIG. 5B, an example in which a terminal device is a PC, a user equipment is a UE, a core network element is an AMF/SMF, a data network-authentication, authorization, and accounting server is a DN-AAA server, and a core network is a 5GC is used. In this implementation, the DN-AAA server mainly authenticates and authorizes a user ID, and sends the user identity information user ID to the AMF/SMF when the authentication and authorization succeeds. The method includes the following plurality of steps. For a part that is not described in detail, refer to an existing protocol. It should be understood that the related descriptions in the embodiment shown in FIG. 4 are also applicable to this implementation. A same or similar technical means may exist between FIG. 4 and FIG. 5A and FIG. 5B. Content that has been described in the embodiment shown in FIG. 4 is not described herein again.

S501: The UE registers with the 5GC.

S502: The UE obtains a URSP policy of the UE.

For example, the UE may request the AMF to obtain the URSP policy of the UE, and then the AMF queries a PCF to obtain the URSP policy of the UE. Alternatively, the PCF may preconfigure the URSP policy for the AMF, and then the AMF sends the URSP policy to the UE based on a NAS message.

The URSP policy includes an access point identifier and/or the user identity information. For a specific meaning, refer to the foregoing related descriptions. It should be understood that after the UE registers with the 5GC, the UE may obtain the URSP of the UE from the AMF. Further, the UE may determine, according to the URSP policy, a specific path through which data traffic of the UE is sent to a core network side. For example, the UE may select, according to the URSP policy, an existing session connected to a specific data network to send the data traffic of the UE; or the UE may send the data traffic of the UE by establishing a new session in a specific network slice.

S503: The PC establishes an L2 connection with the UE.

The URSP policy includes the access point identifier (for example, a specific-SSID) or the user ID. Optionally, the URSP policy further includes one or more of indication information #1, a DNN, or slice information. For a specific meaning of the parameter, refer to related descriptions in the method 400.

For specific implementations of steps S501 to S503, refer to related descriptions of steps S401 and S402.

S504: The UE sends a PDU session establishment/modification request to the AMF/SMF. Correspondingly, the AMF/SMF receives the PDU session establishment/modification request from the UE.

The PDU session establishment/modification request carries the DNN and the slice information.

For example, the UE triggers a PDU session establishment/modification procedure for the PC according to the URSP policy obtained in step S502. For example, when the UE determines that a new device (that is, the PC) is connected to a Wi-Fi hotspot, and an access point identifier A of the Wi-Fi hotspot matches the access point identifier A included in the URSP policy in step S502, the UE initiates the PDU session establishment/modification procedure for the PC. For a specific implementation, refer to related descriptions of step S410 in the foregoing method 400.

Optionally, the UE stores a correspondence between an L2 connection and a PDU session, or the UE stores a correspondence between a PC and a PDU session. For example, the UE allocates a PDU session ID to the PDU session, and the UE may store the correspondence between an L2 connection and a PDU session ID. The L2 connection between the UE and the PC may be a MAC address identifier of the PC or an L2 identifier of the PC. In other words, the UE may store a correspondence between a MAC address of a PC and a PDU session ID, or a correspondence between an L2 identifier of a PC and a PDU session ID.

Further, the AMF/SMF triggers a secondary authentication procedure based on the DNN carried in the PDU session establishment/modification request received in step S504, that is, performs the following step S505.

S505: The AMF/SMF sends an EAP-request/identity message to the UE. Correspondingly, the UE receives the EAP-request/identity message from the AMF/SMF.

For example, the SMF first sends the EAP-request/identity message to the AMF, and then the AMF encapsulates the EAP-request/identity message in the NAS message and sends such a NAS message to the UE, to request to authenticate and authorize the PC.

S506: The UE parses the NAS message.

For example, the UE may obtain the EAP-request/identity message by parsing the NAS message, and the UE may determine, based on the locally stored correspondence between a MAC address of a PC and a PDU session ID and a PDU session ID carried in the NAS message, that such a PDU session is established for the PC. Then the following step S507 is performed.

S507: The UE sends the EAP-request/identity message to the PC. Correspondingly, the PC receives the EAP-request/identity message from the UE.

For example, the UE sends the EAP-request/identity message to the PC over a WLAN air interface or the L2 connection between the UE and the PC.

S508: The PC parses the EAP-request/identity message.

S509: The PC sends an EAP-response/identity message to the UE. Correspondingly, the UE receives the EAP-response/identity message from the PC.

For a specific implementation of parsing the EAP-request/identity message by the PC, refer to a parsing manner in the existing protocol. Details are not described herein. For example, in response to the EAP-request/identity message, the PC sends the EAP-response/identity message to the UE. The EAP-response/identity message includes the user identity information of the PC, that is, the user ID. The user ID indicates identity information of a user to which the PC belongs or user identity information, for example, an employee ID of an employee or a user name. Alternatively, the user ID indicates an end-user using the PC, or the user ID indicates identity information of an end-user using the PC.

S510: The UE sends the EAP-response/identity message to the AMF/SMF. Correspondingly, the AMF/SMF receives the EAP-response/identity message from the UE.

For example, the UE sends the EAP-response/identity message to the AMF, and the AMF encapsulates the EAP-response/identity message into the NAS message and sends such a NAS message to the SMF. It should be understood that, that the UE does not parse the EAP-response/identity herein may be understood as that the PC transparently transmits the EAP-response/identity message to the AMF/SMF via the UE.

S511: The AMF/SMF determines an address of the DN-AAA server based on the DNN.

For example, the address of the DN-AAA server may be obtained from subscription data of the DNN, or may be obtained from the UE. This is not limited in this application.

S512: The AMF/SMF sends an authentication and authorization message to the DN-AAA server. Correspondingly, the DN-AAA server receives the authentication and authorization message from the AMF/SMF.

The authentication and authorization message includes the EAP-response/identity message received in step S510 and UE identification information. The EAP-response/identity message includes the user ID, and the UE identification information may be a GPSI identifier of the UE or an SUPI identifier of the UE.

For example, the SMF sends the authentication and authorization message to the DN-AAA server through an interface between the SMF and the DN-AAA server, or the SMF first sends the authentication and authorization message to a UPF, and then the UPF forwards the authentication and authorization message to the DN-AAA server. This is not limited in this application.

S513: The DN-AAA server parses the authentication and authorization message.

For example, the DN-AAA server may obtain the UE identification information (for example, the GPSI identifier of the UE or the SUPI identifier of the UE) and the user ID in the EAP-response/identity message by parsing the authentication and authorization message.

Further, the DN-AAA server searches for user context information of the user ID based on the user ID. The user context information of the user ID (or subscription data of the user ID) includes one or more of the following parameters: the user ID, a user password, an allowed UE ID list, an any UE ID indication, a user level, or a QoS parameter. For a specific meaning of the parameter, refer to related descriptions in the foregoing method 400.

S514: The DN-AAA server performs an EAP authentication procedure on the PC.

For example, the DN-AAA server completes authentication and authorization on the PC based on the user ID and the user password corresponding to the user ID. For a specific implementation, refer to the existing protocol. Details are not described herein.

Optionally, for a PC that is successfully authenticated and authorized, the DN-AAA server may allocate an IP address to the user ID.

S515: The DN-AAA server sends an authentication and authorization response message to the AMF/SMF. Correspondingly, the AMF/SMF receives the authentication and authorization response message from the DN-AAA server.

For example, the DN-AAA server sends the authentication and authorization response message to the SMF through the interface between the SMF and the DN-AAA, or the DN-AAA first sends the authentication and authorization response message to the UPF, and then the UPF forwards the authentication and authorization response message to the SMF. This is not limited in this application.

The authentication and authorization response message includes the user ID and an EAP-Success message. Optionally, the authentication and authorization response message may further include one or more of the following parameters: the IP address corresponding to the user ID, indication information #2, the user level, or the QoS parameter. For a specific meaning of the parameter, refer to related descriptions in the foregoing method 400.

S516: The AMF/SMF parses the authentication and authorization response message.

For example, the SMF may obtain, by parsing the authentication and authorization response message, the information carried in step S515, for example, the user ID and the EAP-Success message. Optionally, at least one of the following parameters is further included: the IP address, the indication information, the user level, the QoS parameter, or the like. For a specific meaning, refer to the foregoing related descriptions.

Optionally, if the AMF/SMF does not receive, in step S515, the IP address allocated by the DN-AAA server to the user ID, the AMF/SMF may allocate the IP address to the user ID, or the UPF allocates the IP address to the user ID. This is not limited in this application. Further, the AMF/SMF sends the IP address to the DN-AAA server, and stores the IP address in the context information of the user ID. For a specific implementation, refer to step S521.

S517: Optionally, the AMF/SMF sends an SM policy request to the PCF/a UDM. Correspondingly, the PCF/UDM receives the SM policy request from the AMF/SMF, to obtain policy information corresponding to the user ID.

The SM policy request includes the user ID, and optionally, further includes at least one of the following parameters: the IP address corresponding to the user ID, the indication information #2, the QoS parameter, or the user level.

S518: Optionally, the PCF/UDM obtains the context information corresponding to the user ID.

Alternatively, the PCF/UDM searches for, based on the user ID, the context information corresponding to the user ID.

The context information corresponding to the user ID includes the user ID, and optionally, further includes at least one of the following parameters: the IP address corresponding to the user ID, the indication information #2, the QoS parameter, or the user level; or the PCF/UDM adds at least one of the following parameters to or modifies at least one of the following parameters in the context information: the IP address corresponding to the user ID, the indication information #2, the QoS parameter, or the user level.

S519: Optionally, the PCF/UDM determines a QoS policy of a service corresponding to the user ID.

For example, if the PCF/UDM receives the user level or the QoS parameter corresponding to the user ID in step S517, the UDM/PCF may determine the QoS policy of the service of the user ID based on the user level or the QoS parameter. For a specific implementation, refer to the existing protocol.

S520: Optionally, the UDM/PCF sends the QoS policy to the AMF/SMF. Correspondingly, the AMF/SMF receives the QoS policy from the UDM/PCF.

For example, the QoS policy may include one or more of a maximum bandwidth of the service, a guaranteed bandwidth of the service, a delay, a packet loss rate, and traffic.

S521: Optionally, the AMF/SMF sends a notification message to the DN-AAA server. Correspondingly, the DN-AAA server receives the notification message from the AMF/SMF. The notification message carries the user ID and the IP address corresponding to the user ID.

Further, the DN-AAA server may store the IP address in the context information corresponding to the user ID.

It should be understood that for a user ID that is successfully authenticated and authorized, the AMF/SMF continues to perform the PDU session establishment/modification procedure, that is, performs step S522.

S522: The AMF/SMF sends the EAP-Success message to the UE. Correspondingly, the UE receives the EAP-Success message from the AMF/SMF.

For example, the SMF first sends a PDU session establishment accept message to the AMF. Correspondingly, the AMF receives the PDU session establishment accept message from the SMF. The PDU session establishment accept message includes the EAP-Success message. Then, the AMF encapsulates the PDU session establishment accept message in a DL NAS transport message and sends such a DL NAS transport message to the UE.

S523: The UE parses the NAS message.

For example, the UE may obtain the PDU session establishment accept message by parsing the DL NAS transport message, and further obtain the EAP-Success message. Then, the UE may determine, based on the correspondence between a MAC address and a PDU session ID stored in step S504 and a PDU session ID carried in the DL NAS transport, that such a PDU session is established for the PC. Then step S524 is performed.

S524: The UE sends the EAP-Success message to the PC. Correspondingly, the PC receives the EAP-Success message from the UE.

In this case, the PC may access the 5GC based on the EAP-Success message, to obtain a network access service provided by the 5GC.

According to the foregoing technical solution, for a scenario in which the PC accesses the 5GC via the UE, the 5GC identifies the user ID of the PC, and the DN-AAA server authenticates and authorizes the user ID, to ensure that the PC is allowed to access the 5GC only when the user ID is successfully authenticated and authorized, so that a mobile operator can provide connectivity services for the PC based on the 5GC. Further, the 5GC may implement differentiated control and management on a service of the PC based on the user ID. In addition, the user ID is authenticated and authorized, to avoid or reduce potential network security risks.

FIG. 6 is a schematic flowchart of a communication method 600 according to an embodiment of this application. An example in which a terminal device is a PC, a user equipment is a UE, a core network element is an AMF/SMF, a data network-authentication, authorization, and accounting server is a DN-AAA server, and a core network is a 5GC is used. In this implementation, the UE mainly sends a user ID to the AMF/SMF in a process of triggering PDU session establishment/modification of the terminal device, to help the AMF/SMF perform authentication and authorization based on the user ID, subscription data of the UE, or subscription data of the user ID, to determine whether to allow the PC to access the 5GC. The method includes the following plurality of steps. For a part that is not described in detail, refer to an existing protocol. It should be understood that the related descriptions in the embodiment shown in FIG. 4 or FIG. 5A and FIG. 5B are also applicable to this implementation. A same or similar technical means may exist between FIG. 4 to FIG. 6. Content that has been described in the embodiments shown in FIG. 4, FIG. 5A, and FIG. 5B is not described herein again.

S600: A UDM/PCF adds the subscription data of the UE or the subscription data of the user ID.

For a parameter included in the subscription data of the UE or the subscription data of the user ID and a meaning of the parameter, refer to related descriptions in the foregoing method 400.

Optionally, user ID-related information or the subscription data of the user ID may be configured in the UDM/PCF by a core network management system, or may be sent by an AF or the DN-AAA server to the UDM/PCF via an NEF.

S601: The UE registers with the 5GC.

S602: The UE obtains a URSP policy of the UE.

S603: The PC establishes an L2 connection with the UE.

For specific implementations of steps S601 to S603, refer to related descriptions of steps S501 to S503.

In this case, the UE, served as an authenticator, sends an EAP-request/identity message to the PC, to authenticate and authorize the PC.

S604: The UE sends the EAP-request/identity message to the PC. Correspondingly, the PC receives the EAP-request/identity message from the UE.

For example, the UE sends the EAP-request/identity message to the PC over a WLAN air interface between the UE and the PC.

S605: The PC sends an EAP-response/identity message to the UE. Correspondingly, the UE receives the EAP-response/identity message from the PC.

For example, the PC parses the EAP-request/identity message, calculates a response RES, and then returns the EAP-response/identity message to the UE. The EAP-response/identity message includes the user ID.

S606: The UE parses the EAP-response/identity message.

For example, the UE may obtain the user ID by parsing the EAP-response/identity message, and then initiate a PDU session establishment/modification procedure for the PC according to the URSP policy obtained in step S602, that is, the following step S607 is performed.

S607: The UE sends a PDU session establishment/modification request to the AMF/SMF. Correspondingly, the AMF/SMF receives the PDU session establishment/modification request from the UE.

For a parameter carried in the PDU session establishment/modification request, a meaning of the parameter, and a specific implementation of triggering the PDU session establishment/modification procedure, refer to related descriptions of step S504 in the method 500.

S608: The AMF/SMF obtains the subscription data of the UE or the subscription data of the user ID, and determines, based on the subscription data of the UE or the subscription data of the user ID, whether to allow the PC to access the 5GC. Specifically, the following two manners are included.

For example, if a UL NAS transport message in step S607 includes the user ID, the AMF/SMF obtains the subscription data of the UE from the UDM, or obtains the subscription data of the user ID based on the user ID, and then the AMF/SMF determines, based on the subscription data of the UE or the subscription data of the user ID, whether to allow the PC to access the 5GC. For a parameter included in the subscription data of the UE or the subscription data of the user ID and a meaning of the parameter, refer to related descriptions of step S600. For a specific implementation, refer to related descriptions of step S430 in the method 400. For brevity, details are not described herein again.

For example, if the PDU session establishment request message in step S607 includes the user ID, after obtaining the user ID, the AMF may continue to forward the user ID to the SMF through an interface between the AMF and the SMF, so that the SMF determines, based on the subscription data of the UE or the subscription data of the user ID, whether to allow the PC to access the 5GC. For a specific implementation, refer to related descriptions of step S430 in the method 400. For brevity, details are not described herein again. Optionally, if the AMF receives the user ID, the AMF may perform the foregoing determining based on the subscription data of the UE or the subscription data of the user ID. A specific implementation is similar to processing on an SMF side. Details are not described herein again.

Further, the AMF/SMF triggers an authentication and authorization procedure based on the DNN carried in the PDU session request received in step S607, that is, performs the following step S609.

S609: The AMF/SMF sends the EAP-response/identity message to the DN-AAA server. Correspondingly, the DN-AAA server receives the EAP-response/identity message from the AMF/SMF. The EAP-response/identity message includes the user ID.

S610: The DN-AAA server performs an EAP authentication procedure on the PC.

S611: The DN-AAA server sends an EAP-Success message to the AMF/SMF. Correspondingly, the AMF/SMF receives the EAP-Success message from the DN-AAA server.

For specific implementations of steps S609 to S611, refer to related descriptions of steps S512 to S515 in the method 500.

S612: Optionally, the AMF/SMF determines a QoS policy corresponding to the user ID.

For example, the SMF determines the QoS policy based on a user level or a QoS parameter corresponding to the user ID. For a specific implementation, refer to an existing protocol. For a specific explanation of the QoS policy, refer to the related descriptions of step S520 in the method 500.

S613: Optionally, the AMF/SMF sends a notification message to the DN-AAA server. Correspondingly, the DN-AAA server receives the notification message from the AMF/SMF. The notification message carries the user ID and an IP address corresponding to the user ID.

Further, the DN-AAA may store the IP address in context information corresponding to the user ID.

It should be understood that for a user ID that is successfully authenticated and authorized, the AMF/SMF continues to perform the PDU session establishment/modification procedure.

S614: The AMF/SMF sends the EAP-Success message to the UE. Correspondingly, the UE receives the EAP-Success message from the AMF/SMF.

S615: The UE parses a NAS message.

S616: The UE sends the EAP-Success message to the PC. Correspondingly, the PC receives the EAP-Success message from the UE.

In this case, the PC may access the 5GC based on the EAP-Success message, to obtain a network access service provided by the 5GC.

For specific implementations of steps S614 to S616, refer to related descriptions of steps S522 to S524 in the method 500. Details are not described herein again.

According to the foregoing technical solution, for a scenario in which the PC accesses the 5GC via the UE, the 5GC identifies the user ID of the PC, and the AMF/SMF authenticates and authorizes the user ID, to ensure that the PC is allowed to access the 5GC only when the user ID is successfully authenticated and authorized, so that a mobile operator can provide connectivity services for the PC based on the 5GC. Further, the 5GC may implement differentiated control and management on a service of the PC based on the user ID. In addition, the user ID is authenticated and authorized, to avoid or reduce potential network security risks.

It should be noted that, in FIG. 5A, FIG. 5B, and FIG. 6, a scenario in which the PC accesses the 5GC via the UE is used as an example for description. Optionally, this application is also applicable to a scenario in which the UE requests to access the 5GC by including a user ID (an end-user using the UE). In other words, with reference to FIG. 7, the following describes a case in which the 5GC determines, by authenticating and authorizing the ID of the end-user using the UE, whether to allow the UE to access the 5GC. It should be understood that, in comparison with an existing solution in which identification information of the UE (for example, the UE ID) is verified to determine whether the UE is allowed to access the 5GC, authentication and authorization on the user ID may be additional verification based on verification on the UE ID. This is more secure, and verification on the user ID may prevent an unauthorized user from using the 5GC, or prevent an unauthorized user from maliciously attacking the network, or may cause the 5GC to determine a specific service used by a specific user, to facilitate service management and control.

FIG. 7 is a schematic flowchart of a communication method 700 according to an embodiment of this application. As shown in FIG. 7, an example in which a user equipment is a UE, a core network element is an AMF/SMF, a data network-authentication, authorization, and accounting server is a DN-AAA server, and a core network is a 5GC is used. In this implementation, the DN-AAA server or the AMF/SMF authenticates a user ID of the UE, and allows the UE to access the 5GC when the authentication succeeds. The method includes the following plurality of steps. For a part that is not described in detail, refer to an existing protocol. It should be understood that the related descriptions in the embodiments shown in FIG. 4 to FIG. 6 are also applicable to this implementation. A same or similar technical means may exist between FIG. 4 to FIG. 7. Content that has been described in the embodiments shown in FIG. 4 to FIG. 6 is not described herein again.

S701: The UE registers with the 5GC.

S702: The UE obtains a URSP policy of the UE.

Optionally, the URSP policy may not carry an access point identifier. For another carried parameter and a meaning of the parameter, refer to related descriptions in the foregoing method 500.

S703: The UE sends a PDU session establishment/modification request to the AMF/SMF according to the URSP policy. Correspondingly, the AMF/SMF receives the PDU session establishment/modification request from the UE.

The PDU session establishment/modification request carries a DNN and slice information. The PDU session establishment/modification request is used to request to establish/modify a PDU session for the UE. For a specific PDU session establishment/modification procedure, refer to related descriptions of step S504 in the method 500. A difference lies in that the PDU session in step S703 is established/modified for the UE.

The following describes in detail, with reference to two implementations, whether the UE is allowed to access the 5GC based on the user ID. It should be understood that, in Manner 1, the DN-AAA server authenticates and authorizes the user ID. For a part that is not described in detail, refer to related descriptions of the method 400 or 500. In Manner 2, the AMF/SMF authenticates and authorizes the user ID. For a part that is not described in detail, refer to related descriptions of the method 400 or 600.

### Manner 1:

Further, the AMF/SMF triggers a secondary authentication procedure based on the DNN carried in the received PDU session establishment/modification request.

S704: The AMF/SMF sends an EAP-request/identity message to the UE. Correspondingly, the UE receives the EAP-request/identity message from the AMF/SMF. For example, the AMF encapsulates the EAP-request/identity message in a NAS message and sends such a message to the UE.

S705: The UE parses the NAS message.

S706: The UE sends an EAP-response/identity message to the AMF/SMF. Correspondingly, the AMF/SMF receives the EAP-response/identity message from the UE. For example, the UE encapsulates the EAP-response/identity message in the NAS message and sends such a message to the AMF.

S707: The AMF/SMF determines an address of the DN-AAA server based on the DNN.

S708: The AMF/SMF sends an authentication and authorization message to the DN-AAA server. Correspondingly, the DN-AAA server receives the authentication and authorization message from the AMF/SMF.

The authentication and authorization message includes the EAP-response/identity message.

S709: The DN-AAA server parses the authentication and authorization message.

S710: The DN-AAA server performs an EAP authentication procedure on the UE.

S711: The DN-AAA server sends an authentication and authorization response message to the AMF/SMF. Correspondingly, the AMF/SMF receives the authentication and authorization response message from the DN-AAA server.

The authentication and authorization response message includes the user ID and an EAP-Success message.

S712: The AMF/SMF parses the authentication and authorization response message.

### Manner 2:

In this case, the PDU session establishment/modification request in step S703 further includes the user ID, indicating an end-user using the UE.

S713: A UDM/PCF adds subscription data of the UE or subscription data of the user ID.

S714: The AMF/SMF obtains the subscription data of the UE or the subscription data of the user ID, and determines, based on the subscription data of the UE or the subscription data of the user ID, whether to allow the UE to access the 5GC. For a specific implementation, refer to related descriptions of step S608 in the method 600.

Further, the AMF/SMF triggers a secondary authentication procedure based on the DNN carried in the PDU session request, that is, performs the following step S715.

S715: The AMF/SMF sends an EAP-response/identity message to the DN-AAA server. Correspondingly, the DN-AAA server receives the EAP-response/identity message from the AMF/SMF. The EAP-response/identity message includes the user ID.

S716: The DN-AAA server performs an EAP authentication procedure on the UE.

S717: The DN-AAA server sends an EAP-Success message to the AMF/SMF. Correspondingly, the AMF/SMF receives the EAP-Success message from the DN-AAA server.

S718: Optionally, the AMF/SMF determines a QoS policy corresponding to the user ID.

S719: Optionally, the AMF/SMF sends a notification message to the DN-AAA server. Correspondingly, the DN-AAA server receives the notification message from the AMF/SMF. The notification message carries the user ID and an IP address corresponding to the user ID.

Further, the DN-AAA may store the IP address in context information corresponding to the user ID.

It should be understood that for a user ID that is successfully authenticated and authorized, the AMF/SMF continues to perform the PDU session establishment/modification procedure.

S720: The AMF/SMF sends the EAP-Success message to the UE. Correspondingly, the UE receives the EAP-Success message from the AMF/SMF.

In this case, the UE may access the 5GC based on the EAP-Success message, to obtain a network access service provided by the 5GC.

According to the foregoing technical solution, for a scenario in which the UE accesses the 5GC, the 5GC identifies the user ID of the UE, and the user ID is authenticated and authorized, to ensure that the UE is allowed to access the 5GC only when the user ID is successfully authenticated and authorized, so that a mobile operator can provide connectivity services for the UE based on the 5GC. Further, the 5GC may implement differentiated control and management on a service of the UE based on the user ID. In addition, the user ID is authenticated and authorized, to avoid or reduce potential network security risks.

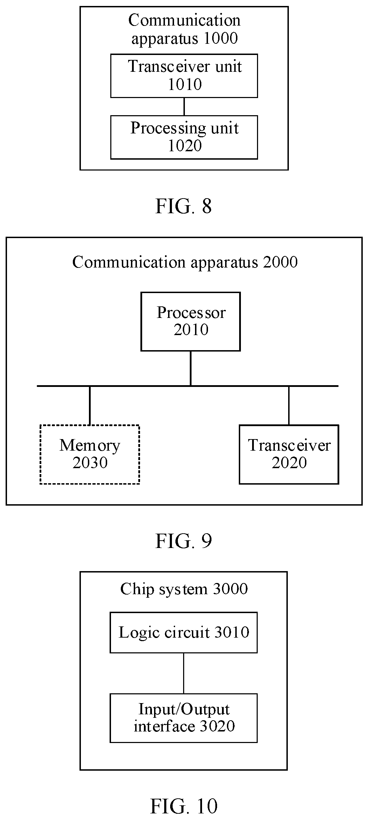

The foregoing describes in detail embodiments on a communication method side of this application with reference to FIG. 1 to FIG. 7. The following describes in detail embodiments on a communication apparatus side of this application with reference to FIG. 8 to FIG. 10. It should be understood that descriptions of the apparatus embodiments correspond to the descriptions of the method embodiments, and therefore for a part that is not described in detail, refer to the foregoing method embodiments.

FIG. 8 is a diagram of a structure of a communication apparatus 1000 according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement corresponding steps or procedures performed by the core network element in the foregoing method embodiments. The processing unit 1020 is configured to perform an operation related to processing of the core network element in the foregoing method embodiments. The transceiver unit 1010 is configured to perform an operation related to sending and receiving of the core network element in the foregoing method embodiments.

In another possible design, the apparatus 1000 may implement corresponding steps or procedures performed by the user equipment in the foregoing method embodiments. The transceiver unit 1010 is configured to perform an operation related to sending and receiving of the user equipment in the foregoing method embodiments. The processing unit 1020 is configured to perform an operation related to processing of the user equipment in the foregoing method embodiments.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1000 may be specifically a transmit end in the foregoing embodiments, and may be configured to perform procedures and/or steps corresponding to the transmit end in the foregoing method embodiments. Alternatively, the apparatus 2000 may be specifically a receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus 1000 may be the receiving device or the sending device in the foregoing embodiments, or may be a chip or a chip system in the receiving device or the sending device, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 9 is a diagram of a structure of a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement procedures and steps corresponding to the core network element in the foregoing method embodiments.

In another possible implementation, the apparatus 2000 is configured to implement procedures and steps corresponding to the user equipment in the foregoing method embodiments.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

FIG. 10 is a diagram of a structure of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to cause the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the core network element in the foregoing method embodiments.

In a solution, the chip system 3000 is configured to implement operations performed by the user equipment in the foregoing method embodiments.

An embodiment of this application further provides a computer-readable storage medium. The computer-readable storage medium stores computer instructions for implementing the methods performed by the core network element and the user equipment in the foregoing method embodiments.

An embodiment of this application further provides a computer program product, including computer program code or instructions. When the computer program code or the instructions are run on a computer, the computer is caused to implement the method performed by the core network element and the user equipment in the foregoing method embodiments.

An embodiment of this application further provides a communication system, including the foregoing core network element and the user equipment. Optionally, the communication system may further include a unified data management function network element, a policy control function network element, an access and mobility management function network element, a session management function network element, a data network-authentication, authorization, and accounting server, or a terminal device.

For explanations and beneficial effects of related content in any one of the apparatuses provided above, refer to the corresponding method embodiment provided above. Details are not described herein again.

For ease of understanding the foregoing embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually represents an "or" relationship between associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but it does not indicate that the indication information definitely carries A.

Indication manners in embodiments of this application should be understood as covering various methods that can cause a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefined" may include being defined in advance, for example, protocol definition. "Pre-configured" may be implemented by pre-storing corresponding code or a corresponding table in a device, or may be implemented in another manner that may indicate related information. A specific implementation thereof is not limited in this application.

(7) In this application, "communication" may also be described as "data transmission", "information transmission", "data processing", or the like. "Transmission" includes "sending" and "receiving".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a process in which a user equipment triggers establishment or modification of a session after the user equipment registers with a core network, wherein the method comprises:
receiving a non-access stratum NAS request message from the user equipment, wherein the NAS request message is used to request to establish or modify the session;
obtaining user identity information based on the NAS request message, wherein the user identity information indicates a user of the user equipment; and
establishing or modifying the session based on the user identity information.

2. The method according to claim 1, wherein the user of the user equipment comprises:
the user of the user equipment is an end-user using the user equipment, and the user identity information is user identity information of the end-user using the user equipment; or
a terminal device is in communication connection with the user equipment, the user of the user equipment is an end-user using the terminal device, the user identity information is user identity information of the end-user using the terminal device, and the terminal device is a terminal device that supports a non-3rd generation partnership project 3GPP access technology and that does not support NAS signaling.

3. The method according to claim 1 or 2, wherein the obtaining the user identity information based on the NAS request message comprises:
receiving the user identity information from a data network-authentication, authorization, and accounting DN-AAA server based on the NAS request message; or
receiving the user identity information from the user equipment based on the NAS request message.

4. The method according to claim 3, wherein the NAS request message comprises a data network name, and the method further comprises:
sending a first authentication and authorization message to the user equipment based on the data network name, wherein the first authentication and authorization message is used to request to authenticate the terminal device or the user equipment;
receiving a first authentication response message from the user equipment, wherein the first authentication response message comprises the user identity information; and
the receiving the user identity information from the DN-AAA server based on the NAS request message comprises:
determining an address of the DN-AAA server based on the data network name;
sending a second authentication and authorization message to the DN-AAA server based on the address of the DN-AAA server, wherein the second authentication and authorization message comprises the first authentication response message, and the second authentication and authorization message is used to request to authenticate and authorize the user identity information; and
in response to the second authentication and authorization message, when the user identity information is successfully authenticated and authorized, receiving a first message from the DN-AAA server, wherein the first message comprises the user identity information and a second message, and the second message indicates that the user identity information is successfully authenticated and authorized.

5. The method according to claim 4, wherein the first message further comprises one or more of the following: an internet protocol IP address of the session, a user level, a quality of service QoS parameter, or second indication information, wherein the QoS parameter indicates a parameter for QoS control performed on a data flow of the session, the second indication information indicates to collect statistics on the data flow of the session, and the user level indicates a service level of the user; and
the method further comprises:
determining, based on the user level and/or the QoS parameter, policy information corresponding to the user identity information.

6. The method according to claim 4, wherein the method further comprises:
sending a request message to a policy control function network element or a unified data management function network element, wherein the request message is used to obtain policy information corresponding to the user identity information, and the request message comprises the user identity information; and
receiving the policy information from the policy control function network element or the unified data management function network element, wherein the policy information is determined based on a user level and/or a QoS parameter corresponding to the user identity information.

7. The method according to claim 4 or 6, wherein the method further comprises:
obtaining an internet protocol IP address of the session; and
sending the user identity information and the IP address to the DN-AAA server.

8. The method according to claim 1 or 2, wherein the user identity information is carried in the NAS request message.

9. The method according to any one of claims 1 to 8, wherein the establishing or modifying the session based on the user identity information comprises:
obtaining subscription data of the user equipment or subscription data of the user identity information based on the user identity information; and
establishing or modifying the session based on the subscription data of the user equipment or the subscription data of the user identity information.

10. The method according to claim 9, wherein the subscription data of the user equipment comprises a user identity information list and/or third indication information, the user identity information list comprises at least one piece of user identity information, the at least one piece of user identity information indicates at least one piece of user identity information for which access to the user equipment is allowed, and the third indication information indicates that for any piece of user identity information, access to the core network via the user equipment is allowed; and
the establishing or modifying the session based on the subscription data of the user equipment comprises:
if the user identity information is comprised in the user identity information list, or the subscription data of the user equipment comprises the third indication information, establishing or modifying the session.

11. The method according to claim 9, wherein the subscription data of the user identity information comprises a user equipment identifier list and/or first indication information, the user equipment identifier list comprises at least one user equipment identifier, the at least one user equipment identifier indicates at least one user equipment to which access is allowed for the user identity information, and the first indication information indicates that for the user identity information, access to the core network via any user equipment is allowed; and
the establishing or modifying the session based on the subscription data of the user identity information comprises:
if an identifier of the user equipment is comprised in the user equipment identifier list, or the subscription data of the user identity information comprises the first indication information, establishing or modifying the session.

12. The method according to any one of claims 1 to 11, wherein the method further comprises:
when the user identity information is successfully authenticated and authorized, sending a NAS response message to the user equipment, wherein the NAS response message indicates that the session is successfully established or modified.

13. A communication method, applied to a process in which a user equipment triggers establishment or modification of a session after the user equipment registers with a core network, wherein the method comprises:
obtaining user identity information, wherein the user identity information indicates a user of the user equipment; and
sending a non-access stratum NAS request message to a core network element based on the user identity information, wherein the NAS request message is used to request to establish the session or request to modify the session.

14. The method according to claim 13, wherein the method further comprises:
when the user identity information is successfully authenticated and authorized, receiving a NAS response message from the core network element, wherein the NAS response message indicates that the session is successfully established or modified.

15. The method according to claim 13 or 14, wherein the obtaining the user identity information comprises:
obtaining user identity information of an end-user using the user equipment, wherein the user of the user equipment is the end-user using the user equipment, and the user identity information is the user identity information of the end-user using the user equipment; or
when the user equipment establishes a communication connection with a terminal device, obtaining the user identity information from the terminal device, wherein the user of the user equipment is an end-user using the terminal device, the user identity information is user identity information of the end-user using the terminal device, and the terminal device is a terminal device that supports a non-3rd generation partnership project 3GPP access technology and that does not support NAS signaling.

16. The method according to any one of claims 13 to 15, wherein the NAS request message comprises the user identity information.

17. The method according to any one of claims 13 to 16, wherein before the user equipment triggers the establishment or the modification of the session, the method further comprises:
receiving a route selection policy from the core network element, wherein the route selection policy comprises an access point identifier and/or the user identity information, and the access point identifier indicates an access point name provided by the user equipment.

18. The method according to claim 17, wherein the sending the NAS request message to the core network element based on the user identity information comprises:
when an access point used by the terminal device to establish the communication connection with the user equipment is the same as an access point indicated by the access point identifier comprised in the route selection policy, sending the NAS request message to the core network element; and/or
when the user identity information obtained by the user equipment is the same as the user identity information comprised in the route selection policy, sending the NAS request message to the core network element.

19. The method according to claim 17 or 18, wherein the route selection policy further comprises indication information, and the sending the NAS request message to the core network element based on the user identity information comprises:
when the indication information indicates the terminal device to establish the communication connection with the user equipment via the access point corresponding to the access point identifier, or when the indication information indicates to obtain the user identity information, sending the NAS request message to the core network element.

20. A communication method, applied to a process in which a user equipment triggers establishment or modification of a session after the user equipment registers with a core network, wherein the method comprises:
obtaining, by the user equipment, user identity information, wherein the user identity information indicates a user of the user equipment;
sending, by the user equipment, a non-access stratum NAS request message to a core network element based on the user identity information, and receiving, by the core network element, the NAS request message from the user equipment, wherein the NAS request message is used to request to establish or modify the session;
obtaining, by the core network element, the user identity information based on the NAS request message; and
establishing or modifying, by the core network element, the session based on the user identity information.

21. The method according to claim 20, wherein the user of the user equipment comprises:
the user of the user equipment is an end-user using the user equipment, and the user identity information is user identity information of the end-user using the user equipment; or
a terminal device is in communication connection with the user equipment, the user of the user equipment is an end-user using the terminal device, the user identity information is user identity information of the end-user using the terminal device, and the terminal device is a terminal device that supports a non-3rd generation partnership project 3GPP access technology and that does not support NAS signaling.

22. The method according to claim 20 or 21, wherein obtaining, by the core network element, the user identity information of the terminal device based on the NAS request message comprises:
receiving, by the core network element, the user identity information from a data network-authentication, authorization, and accounting DN-AAA server based on the NAS request message; or
receiving, by the core network element, the user identity information from the user equipment based on the NAS request message.

23. The method according to claim 22, wherein the NAS request message comprises a data network name, and the method further comprises:
sending, by the core network element, a first authentication and authorization message to the user equipment based on the data network name, and receiving, by the user equipment, the first authentication and authorization message from the core network element, wherein the first authentication and authorization message is used to request to authenticate the terminal device or the user equipment;
sending, by the user equipment, a first authentication response message to the core network element, and receiving, by the core network element, the first authentication response message from the user equipment, wherein the first authentication response message comprises the user identity information; and
the receiving, by the core network element, the user identity information from the DN-AAA server based on the NAS request message comprises:
determining, by the core network element, an address of the DN-AAA server based on the data network name;
triggering, by the core network element, an authentication and authorization procedure for the user equipment or the terminal device based on the data network name;
sending, by the core network element, a second authentication and authorization message to the DN-AAA server based on the address of the DN-AAA server, and receiving, by the DN-AAA server, the second authentication and authorization message from the core network element, wherein the second authentication and authorization message comprises the first authentication response message, and the second authentication and authorization message is used to request to perform an authentication and authorization procedure on the user identity information; and
in response to the second authentication and authorization message, when the user identity information is successfully authenticated and authorized, sending, by the DN-AAA server, a first message to the core network element, and receiving, by the core network element, the first message from the DN-AAA server, wherein the first message comprises the user identity information and a second message, and the second message indicates that the user identity information is successfully authenticated and authorized.

24. The method according to claim 20 or 21, wherein the user identity information is carried in the NAS request message.

25. The method according to any one of claims 20 to 24, wherein before sending, by the user equipment, the NAS request message to the core network element based on the user identity information, the method further comprises:
sending, by the user equipment, a request message to the terminal device, and receiving, by the terminal device, the request message from the user equipment, wherein the request message is used to obtain the user identity information; and
sending, by the terminal device, a response message to the user equipment, and receiving, by the user equipment, the response message from the terminal device, wherein the response message comprises the user identity information, and the user identity information is the user identity information of the end-user using the terminal device.

26. The method according to any one of claims 20 to 25, wherein establishing or modifying, by the core network element, the session based on the user identity information comprises:
obtaining, by the core network element, subscription data of the user equipment or subscription data of the user identity information based on the user identity information; and
establishing or modifying, by the core network element, the session based on the subscription data of the user equipment or the subscription data of the user identity information.

27. The method according to claim 26, wherein the subscription data of the user equipment comprises a user identity information list and/or third indication information, the user identity information list comprises at least one piece of user identity information, the at least one piece of user identity information indicates at least one piece of user identity information for which access to the user equipment is allowed, and the third indication information indicates that for any piece of user identity information, access to the core network via the user equipment is allowed; and
establishing or modifying, by the core network element, the session based on the subscription data of the user equipment comprises:
if the user identity information is comprised in the user identity information list, or the subscription data of the user equipment comprises the third indication information, establishing or modifying, by the core network element, the session.

28. The method according to claim 26, wherein the subscription data of the user identity information comprises a user equipment identifier list and/or first indication information, the user equipment identifier list comprises at least one user equipment identifier, the at least one user equipment identifier indicates at least one user equipment to which access is allowed for the user identity information, and the first indication information indicates that for the user identity information, access to the core network via any user equipment is allowed; and
establishing or modifying, by the core network element, the session based on the subscription data of the user identity information comprises:
if an identifier of the user equipment is comprised in the user equipment identifier list, or the subscription data of the user identity information comprises the first indication information, establishing or modifying, by the core network element, the session.

29. A communication apparatus, comprising one or more functional modules, wherein the one or more functional modules are configured to perform the method according to any one of claims 1 to 12, or the one or more functional modules are configured to perform the method according to any one of claims 13 to 19.

30. A communication apparatus, comprising a processor, wherein the processor is coupled to a memory, and the processor is configured to execute a computer program stored in the memory, to cause the apparatus to perform the method according to any one of claims 1 to 12, or cause the apparatus to perform the method according to any one of claims 13 to 19.

31. A computer-readable storage medium, wherein the computer-readable storage medium stores a computer program; and when the computer program is run on a computer, the computer is caused to perform the method according to any one of claims 1 to 12, or the computer is caused to perform the method according to any one of claims 13 to 19.

32. A communication system, comprising a core network element, wherein the core network element is configured to perform the method according to any one of claims 1 to 12.

33. The communication system according to claim 32, wherein the communication system further comprises at least one of a user equipment, a terminal device, or a DN-AAA server, and the user equipment is configured to perform the method according to any one of claims 13 to 19.

34. A computer program product, wherein when the computer program product is executed by a communication apparatus, the method according to any one of claims 1 to 12 is implemented, or the method according to any one of claims 13 to 19 is implemented.
